# EUROPÄISCHE PATENTSCHRIFT

(11) **EP 0 834 095 B1**
(45) Veröffentlichungstag und Bekanntmachung des Hinweises auf die Patenterteilung: **28.08.2002**
(21) Anmeldenummer: 96920704.2
(22) Anmeldetag: 19.06.1996
(51) Int. Cl.: G02B 6/42, G02B 6/12

(54) **OPTOELEKTRONISCHE SCHALTUNG**
OPTOELECTRONIC CIRCUIT
CIRCUIT OPTOELECTRONIQUE

(30) Priorität: 19.06.1995 DE 19522591
(43) Veröffentlichungstag der Anmeldung: 08.04.1998
(73) Patentinhaber: Heinrich-Hertz-Institut für Nachrichtentechnik Berlin GmbH, 10587 Berlin (DE)
(72) Erfinder: HEIDRICH, Helmut, D-12357 Berlin (DE); KAISER, Ronald, D-12157 Berlin (DE); HAMACHER, Michael, D-13507 Berlin (DE)
(74) Vertreter: Rudolph, Margit
(86) Internationale Anmeldenummer: DE9601129
(87) Internationale Veröffentlichungsnummer: WO97000460

(56) Entgegenhaltungen:
- GB-A- 2 241 130
- ELECTRONICS LETTERS, Bd. 30, Nr. 11, 26.Mai 1994, Seite 897/898 XP000465062 RAGDALE C M ET AL: "INTEGRATED THREE CHANNEL LASER AND OPTICAL MULPLEXER FOR NARROWBAND WAVELENGTH DIVISION MULTIPLEXING" in der Anmeldung erwähnt
- OPTICAL FIBER COMMUNICATION. SUMMARIES OF PAPERS PRESENTED AT THE CONFERENCE OFC '95, SAN DIEGO, FEB. 26 - MAR. 3, 1995, Bd. 8, 26.Februar 1995, INSTITUTE OF ELECTRICAL AND ELECTRONICS ENGINEERS, Seite 140 XP000517675 YAMADA Y ET AL: "FDM OPTICAL-LOOP BUFFER AND ITS APPLICATIONS TO A PHOTONIC ATM SWITCH: FRONTIER NET" in der Anmeldung erwähnt

## Beschreibung

Die Erfindung betrifft optoelektronische Schaltungen für gleichzeitigen Sendeund Empfangsbetrieb im Wellenlängen-Multiplex-Verfahren in einem Aufbau, in dem die relative Lage aktiver Schaltungskomponenten deren Funktionsweise bestimmt. Es werden für bidirektionalen und unidirektionalen Sende- und Empfangsbetrieb sowohl einstufige als auch mehrstufige Schaltungen mit einer Lichtwellenleiteranordnung und Lichtsignaldetektoren und Lichtsignalquellen als aktive Schaltungskomponenten behandelt. Diese Schaltungen können entweder integriert oder hybrid aufgebaut sein.

Aus der GB-A-2 241 130 ist eine bidirektionale optische Sende- und Empfangsvorrichtung bekannt, bei der ein optischer Duplexer mit einer als Viertor ausgebildeten Wellenleiterkoppelvorrichtung vorgesehen ist. Zwei Tore dieses Viertors auf derselben Anschlußseite sind mit den aktiven Schaltungskomponenten zum Senden und Empfangen verbunden. Die beiden anderen Tore auf der anderen Anschlußseite führen einerseits zu einem externen Wellenleiter und andererseits zu einem Phasenschieber. Zur Verringerung von störenden Einflüssen zwischen Sende- und Empfangskomponenten werden komplementäre Signale verwendet, die über das an sich nicht benötigte vierte Tor geleitet und durch Reflexion an einer spiegelnden Fläche und den Phasenschieber bereitgestellt werden.

Der Stand der Technik, von dem die Erfindung ausgeht, ist bekannt aus RAGDALE, C.M, REID, T.J., REID, D.C.J., CARTER, A.C. : Integrated three channel laser and optical multiplexer for narrowband wavelength division multiplexing, Electronics Letters 1994, Vol. 30, No. 11. Dort ist ein Wellenlängen-Multiplexer beschrieben, der eine unidirektionale Mehrkanal-Datenübertragung über einen Lichtwellenleiter ermöglicht. Hierzu werden nachfolgende Einzelheiten näher erläutert :

Der Wellenlängen-Multiplexer weist drei Laser auf, die jeweils einen Sendekanal beschicken. Der Abstand zwischen den Wellenlängen der Laser, also der Kanalabstand, beträgt ca. 5 nm.

Die Laser sind über mehrere 3dB-Koppler, Lichtwellenleiter und wellenlängenselektive Gitterrefiektoren mit einem Signalausgang verbunden, an dem die von den Lasern emittierten Lichtsignale in einen externen Lichtwellenleiter ausgekoppelt werden. Der Multiplexer ist als optoelektronische integrierte Schaltung ausgeführt, d.h. alle Bauelemente sind auf einem Chip integriert.

Jeder 3dB-Koppler ist mit vier Zweigen von Lichtwellenleitem verbunden, wobei die Zweige einander paarweise gegenüberliegen. Der erste und der zweite Zweig sind also jeweils dem dritten und im vierten Zweig gegenüberliegend angeordnet.

Am ersten Zweig des ersten 3dB-Kopplers ist der erste Laser mit der Wellenlänge λ₁ angeschlossen. Die von dem ersten Laser emittierten Lichtsignale werden also zu je 50 % in den dritten und vierten Zweig des 3dB-Kopplers eingekoppelt. Im dritten und vierten Zweig des ersten 3dB-Kopplers ist jeweils ein wellenlängenselektiver Gitterreflektor angeordnet, der Licht der Wellenlänge λ₁ reflektiert und für Licht anderer Wellenlängen transparent ist. Das von dem ersten Laser emittierte Licht wird also an den Gitterreflektoren reflektiert und durchläuft den Koppler ein zweites Mal in entgegengesetzter Richtung. Dabei wird das von dem ersten Laser emittierte Licht nahezu vollständig in den zweiten Zweig eingekoppelt, an den der Signalausgang des Multiplexers angeschlossen ist. Da der erste 3dB-Koppler nahezu das gesamte an den Gitterreflektoren reflektierte Licht in den zweiten Zweig einkoppelt, wird zum einen eine Störung des Lasers durch in den ersten Zweig zurückfallendes Licht verhindert und zum anderen der Wirkungsgrad beim Senden erhöht.

Der erste Laser, der erste 3dB-Koppler und der erste wellenlängenselektive Gitterreflektor gehören einer ersten Stufe an, die den ersten Kanal mit der Wellenlänge λ₁ beschickt. Hinter dieser ersten Stufe ist eine weitere Stufe angeordnet, die analog aufgebaut ist, wobei der Laser der zweiten Stufe Licht der zweiten Wellenlänge λ₂ emittiert und der wellenlängeselektive Gitterreflektor der zweiten Stufe Licht der Wellenlänge **λ**₂ reflektiert.

Der zweite Zweig der zweiten Stufe ist über einen weiteren 3dB-Koppler mit dem dritten und dem vierten Zweig des ersten 3dB-Kopplers der ersten Stufe verbunden. Das von dem Laser der zweiten Stufe emittierte Licht wird also von dem 3dB-Koppler der zweiten Stufe zu je 50 % in den dritten bzw. vierten Zweig des ersten 3dB-Kopplers der zweiten Stufe eingekoppelt, dort an den wellenlängenselektiven Gitterreflektoren reflektiert und nahezu vollständig in den zweiten Zweig der zweiten Stufe eingekoppelt. Der zwischen erster und zweiter Stufe angeordnete 3dB-Koppler koppelt das aus der zweiten Stufe kommende Licht zu je 50 % in den dritten bzw. vierten Zweig des ersten 3dB-Kopplers der ersten Stufe ein. Dort passiert das Licht aus der zweiten Stufe die wellenlängenselektiven Gittererflektoren, da diese auf die erste Wellenlänge λ₁ abgestimmt sind, und wird von dem ersten 3dB-Koppler der ersten Stufe nahezu vollständig in den zweiten Zweig der ersten Stufe eingekoppelt und so dem Signalausgang des Multiplexers zugeführt.

Hinter der zweiten Stufe ist nun ein vierter 3dB-Koppler angeordnet, wobei der dritte und vierte Zweig dieses vierten 3dB-Kopplers mit dem dritten bzw. vierten Zweig des 3dB-Kopplers der zweiten Stufe verbunden sind. An den ersten Zweig dieses vierten 3dB-Kopplers ist ein dritter Laser angeschlossen, der Licht der Wellenlänge λ₃ emittiert. Das von dem dritten Laser emittierte Licht passiert also die beiden wellenlängenselektiven Gitterereflektoren der ersten bzw. zweiten Stufe und wird schließlich am Signalausgang in den externen Lichtwellenleiter ausgekoppelt.

Der Multiplexer ist also aus drei Stufen aufgebaut, wobei jede Stufe einen Kanal mit Lichtsignalen beschickt. Dieser vorbeschriebene Wellenlängen-Multiplexer ermöglicht eine unidirektionale Mehrkanal-Datenübertragung über einen Lichtwellenleiter, also einen Mehrkanal-Sendebetrieb. Dieser Aufbau kann auch als Wellenlängen-Demultiplexer aufgebaut und betrieben werden. Ein gleichzeitiger Sende- und Empfangsbetrieb, gegebenenfalls sogar über einen einzelnen Lichtwellenleiter, ist damit jedoch nicht möglich.

Der Erfindung liegt die Aufgabe zugrunde, für im Wellenlängen-Multiplex übertragene Daten optoelektronische Schaltungsanordnungen für Transceiver sowie für Multiplexer oder Demultiplexer zu schaffen, die auch die Funktion "Add/Drop" erfüllen, also zum Beispiel Kanäle mit am Empfangsort löschbaren Daten mit dort generierten Daten neu belegen zu können. Diese Schaltungen sollen in großen Stückzahlen, zum Beispiel als integrierte Schaltungen, aber auch in geringeren Stückzahlen, aus einzelnen Moduln zusammensetzbar, unter ökonomisch vertretbarem Herstellungsaufwand zur Verfügung gestellt werden und dabei vor allem möglichst geringe gegenseitige Störeinflüsse der aktiven Schaltungskomponenten gewährleisten.

Diese Aufgabe wird erfindungsgemäß jeweils durch die Merkmale der unabhängigen Patentansprüche 1 bis 6 gelöst.

Im nachfolgenden Beschreibungstext werden teilweise Begriffe verwendet, die etwas anders lautend, jedoch gleichbedeutend mit den in den unabhängigen Ansprüchen verwendeten Begriffen sind. Dies betriftt insbesondere den Begriff "Zweig", der gleichbedeutend mit dem Begriff "Wellenleiterzweig" ist.

Die Erfindung schließt die technische Lehre ein, elektrisches und optisches Übersprechen zu minimieren. Das gilt sowohl für den Fall, daß ein Laser, eine Photodiode und ein 3dB-Koppler auf einem Chip integriert sind, wie auch für den Fall eines hybriden Aufbaus aus den einzelnen Komponenten, wobei der 3dB-Koppler am Signaleingang anliegende Lichtsignale in Abhängigkeit von der Wellenlänge entweder sperrt oder der Photodiode zuführt und die Photodiode und der Laser zur Verringerung des elektrischen Übersprechens zueinander beabstandet, auf gegenüberliegenden Seiten der Schaltung angeordnet, sind.

Da die Lichtsignalquelle elektrisch mit schnell modulierender Stromeinprägung betrieben ist, bildet sich im Sendebetrieb der Schaltung im Umfeld der Lichtsignalquelle ein elektromagnetisches Feld aus, das auf den Lichtsignaldetektor bzw. auf dessen Ausgangsleitung übersprechen und so dessen Ausgangssignal stören kann. Zur Minimierung dieses elektrischen Übersprechens ist die Lichtsignalquelle deshalb zu dem Lichtsignaldetektor beabstandet, beide Komponenten liegen auf einander gegenüberliegenden Seiten der Schaltung. Darüber hinaus wird durch die Anordnung wellenlängenselektiver Komponenten auch das optische Übersprechen von der Lichtsignalquelle auf den Lichtsignaldetektor verringert.

Erfindungsgemäße optoelektronische Schaltungen ermöglichen einen gleichzeitigen Sende- und Empfangsbetrieb im Wellenlängen-Multiplex-Verfahren. Dabei sendet und empfängt eine solche Schaltung auf unterschiedlichen Wellenlängen. Die Sende- und Empfangswellen liegen dabei vorzugsweise in den optischen Fenstern bei 1500 nm bzw. 1300 nm, d.h. innerhalb des sogenannten dritten optischen Fensters des Werkstoffs Glas, in dem die Lichtabsorption und damit die Dämpfung des Lichtwellenleiters relativ gering ist. Bei der Verwendung dieser Wellenlängen lassen sich deshalb Daten über große Entfernungen mit relativ geringer Sendeleistung bzw. ohne Zwischenverstärker ("Repeater") übertragen.

In einer Schaltung, die nicht nur empfangene Daten detektiert, ist eine Lichtsignalquelle angeordnet, die im Sendebetrieb Lichtsignale emittiert. In bevorzugten Ausführungsformen der Erfindung wird als Lichtsignalquelle ein einmodiger Laser verwendet, der nur in einer Grundschwingung Licht emittiert.

Weiterhin ist in einer Schaltung, die nicht nur zu sendende Daten generiert, ein Lichtsignaldetektor angeordnet, der die über den Lichtwellenleiter empfangenen Lichtsignale in elektrische Signale umwandelt und an einem Anschlußkontakt an der Außenseite des Schaltungsgehäuses bereitstellt.

Zur Ankopplung an ein bidirektional betriebenes Übertragungsnetz weist eine erfindungsgemäße optoelektronische Schaltung eine gemeinsame Schnittstelle zum Anschluß des externen Lichtwellenleiters auf, über den die Daten übertragen werden. Zur Ankopplung an ein unidirektionales Übertragungsnetz wie auch zwecks Kaskadierung sind bei jeder Komponente getrennte Schnittstellen zum Anschluß der externen Lichtwellenleiter vorgesehen, die entweder zu empfangende oder intern weiterzuleitende / extern auszusendende Datenströme führen.

Bei der Lichtwellenleiteranordnung in einer bevorzugten Ausbildungsform der Erfindung für bidirektionale Übertragung ist der erste Zweig mit der gemeinsamen Schnittstelle, der zweite Zweig mit der Lichtsignalquelle und der dritte und/oder der vierte Zweig mit einem Lichtsignaldetektor verbunden. Diese Lichtwellenleiteranordnung ermöglicht die Übertragung der über den externen Lichtwellenleiter empfangenen und an der gemeinsamen Schnittstelle eingehenden Lichtsignale zum Lichtsignaldetektor bzw. die Übertragung der von der Lichtsignalquelle emittierten Lichtsignale zur gemeinsamen Schnittstelle und deren Einkopplung in den externen Lichtwellenleiter.

Die Lichtsignalquelle und der Lichtsignaldetektor sind gemäß der technischen Lehre der Erfindung auf gegenüberliegenden Seiten der Schaltung angeordnet. Daraus folgt, daß der zweite Zweig sowohl dem dritten als auch dem vierten Zweig der Lichtwellenleiteranordnung gegenüberliegt.

Die vier Zweige der Lichtwellenleiteranordnung sind durch einen optischen Koppler miteinander verbunden. Zwei der Zweige sind der einen Seite und die beiden anderen Zweige auf der gegenüberliegenden Seite an den Koppler angeschlossen. Ein aus einem Zweig in den Koppler eintretendes Lichtsignal wird dabei jeweils in die auf der gegenüberliegenden Seite angeschlossenen Zweige eingekoppelt, wobei der Koppler ein Teilungsverhältnis 1:1 aufweist, also ein aus einem Zweig eintretendes Lichtsignal jeweils mit 50 % der Intensität in die beiden gegenüberliegenden Zweige einkoppelt. Der Koppler ist also ein 3dB-Koppler.

In einer bevorzugten Ausführungsform der Erfindung ist der Koppler als 3dB-MMI-Koppler (MMI - Multi-Mode-Interference) ausgebildet. Der 3dB-MMI-Koppler weist einen aus lichtleitendem Material bestehenden Multi-Modebereich auf, wobei die vier Zweige der Lichtwellenleiteranordnung an zwei gegenüberliegenden Seitenflächen des Multi-Mode-Bereichs paarweise mit diesem verbunden sind. In Abhängigkeit von der Länge des Multi-Modebereichs arbeitet der Koppler entweder im sogenannten Cross-State, im Bar-State oder in einem Zwischenzustand.

Im Bar-State wird das elektromagnetische Feld am Eingang des Multi-Mode-Bereichs auf den Ausgang des Multi-Mode-Bereichs abgebildet. Ein Lichtsignal, das an einem Zweig am Eingang des Kopplers anliegt, wird deshalb in den geraden ("Bar") gegenüberliegenden Zweig eingekoppelt.

Im Cross-State hingegen erscheint das elektromagnetische Feld am Eingang des Multi-Mode-Bereichs am Ausgang gespiegelt. Ein Lichtsignal, das an einem Zweig am Eingang des Kopplers anliegt, wird deshalb auf den schräg ("Cross") gegenüberliegenden Zweig am Ausgang eingekoppelt.

Ein ausgezeichneter Zwischenzustand ist der 3dB-Zustand. Ein an einem Zweig am Eingang des Kopplers anliegendes Lichtsignal wird hier zu gleichen Teilen in die beiden gegenüberliegenden Zweige eingekoppelt, wobei die beiden Ausgangssignale einen Gangunterschied von λ/4 aufweisen. Werden die beiden Ausgangssignale also am Ausgang - beispielsweise durch ein Wellenleiter-Gitter oder durch eine Filterplatte- gespiegelt, so durchläuft das Lichtsignal den Koppler ein zweites Mal in entgegengesetzter Richtung, wobei das Licht zu gleichen Teilen in die beiden Eingangszweige eingekoppelt wird. Wegen des Gangunterschieds führt dies zu einer Auslöschung in einem Eingangszweig des Kopplers. Derartige Koppler zeichnen sich vorteilhaft durch eine relativ hohe Fertigungstoleranz aus.

In einer anderen Ausführungsform der Erfindung ist der Koppler, der die verschiedenen Zweige der Lichtwellenleiteranordnung miteinander verbindet, ein 3 dB-Richtkoppler. In einem Lichtwellenleiter wird das Licht an den Grenzflächen zu dem umgebenden Medium totalreflektiert. Das Licht dringt dabei jedoch bis zu der sogenannten Eindringtiefe in das umgebende Medium ein. Wird nun ein zweiter Lichtwellenleiter so nah an den ersten Lichtwellenleiter herangeführt, daß der Abstand zwischen den beiden Lichtwellenleitem kleiner ist als die Eindringtiefe, so kann Licht zwischen den beiden Lichtwellenleitern übertreten. Hierbei bleibt die Richtung der Lichtstrahlen im wesentlichen erhalten.

In einer Variante der Erfindung dient die erfindungsgemäße monolithisch integrierte optoelektronische OEIC-Schaltung ("Optoelectronic-Integrated-Circuit") als bidrektionaler Sender/Empfänger ("Transceiver"). Auch hierbei befinden sich der erste und der zweite Zweig der Lichtwellenleiteranordnung auf derselben Seite des Kopplers, der dritte und der vierte Zweig auf der dazu gegenüberliegenden Seite. In dieser Variante koppelt der Koppler ein an der gemeinsamen Schnittstelle eingehendes Lichtsignal zu jeweils gleichen Teilen in den dritten und vierten Zweig ein. Im dritten und vierten Zweig ist in dieser Variante zwischen dem Lichtsignaldetektor und dem Koppler ein wellenlängenselektiver Reflektor angeordnet, der in Abhängigkeit von der Wellenlänge des Lichts entweder nahezu vollständig reflektiert oder lichtdurchlässig ist. Der Reflektor ist in dieser Variante so ausgelegt, daß Licht der Sendewellenlänge nahezu vollständig reflektiert wird, während Licht der Empfangswellenlänge nahezu vollständig durchgelassen wird.

Im Empfangsbetrieb der Schaltung wird ein an der Schnittstelle anliegendes Lichtsignal mit der Empfangswellenlänge also vom ersten Zweig in den dritten oder vierten Zweig eingekoppelt, passiert dort den wellenlängenselektiven Reflektor nahezu ungeschwächt und erreicht so den Lichtsignaldetektor.

Im gleichzeitig möglichen Sendebetrieb dagegen wird das von der Lichtsignalquelle emittierte Licht vom zweiten Zweig zu gleichen Teilen in den dritten und vierten Zweig eingekoppelt, dort von dem wellenlängenselektiven Reflektor nahezu vollständig reflektiert und durchläuft anschließend den Koppler in umgekehrter Richtung. Dabei wird das Lichtsignal vom dritten und vierten Zweig in den ersten Zweig eingekoppelt und erreicht so die gemeinsame Schnittstelle, an der das Lichtsignal schließlich in den externen Lichtwellenleiter ausgekoppelt und damit gesendet wird.

Wichtig ist in diesem Zusammenhang, daß der Koppler das an den wellenlängenselektiven Reflektoren im dritten und vierten Zweig reflektierte Licht nicht zurück in den mit der Lichtsignalquelle verbundenen zweiten Zweig einkoppelt. Dies ist insbesondere bei Verwendung eines einmodigen Lasers als Lichtsignalquelle wichtig, da der Berieb des Lasers durch zurückkommendes Licht gestört würde.

In der vorstehend beschriebenen Variante der Erfindung in der Ausführung als bidirektionaler Sender/Empfänger ("Transceiver-OEIC") sind die Lichtsignalquelle und der Lichtsignaldetektor einander gegenüberliegend angeordnet, wobei der Koppler das von der Lichtsignalquelle emittierte Licht in den Zweig des Lichtsignaldetektors einkoppelt. Aus diesem Grund besteht die Gefahr des Übersprechens von der Lichtsignalquelle auf den Lichtsignaldetektor. Dieses optische Übersprechen wird dadurch verringert, daß vor dem Lichtsignaldetektor jeweils ein wellenlängenselektiver Reflektor angeordnet ist, der Licht der Sendewellenlänge reflektiert. Der Reflexionsgrad dieses Reflektors ist jedoch auch für Licht der Sendewellenlänge nicht exakt hundert Prozent, so daß ein Teil des von der Lichtsignalquelle emittierten Lichts den Lichtsignaldetektor erreicht und ein - wenn auch geringes - optisches Übersprechen verursacht.

Um das optische Übersprechen weiter zu reduzieren, ist deshalb in einer Ausführungsform der Erfindung im dritten und/oder vierten Zweig zwischen dem Lichtsignaldetektor und dem wellenlängenselektiven Reflektor ein Stoppbandfilter angeordnet, das Licht mit einer anderen Wellenlänge als der Sendewellenlänge weitgehend ungeschwächt durchläßt. Hierbei ist wichtig, daß die Bandbreite des Stoppbandfilters kleiner ist als der Kanalabstand zwischen der Sendewellenlänge und der Empfangswellenlänge, damit die Sendewellenlänge selektiv ausgefiltert werden kann, ohne den Empfang der Photodiode auf der Empfangswellenlänge zu beeinträchtigen.

In einer Ausführungsform der Erfindung wird das optische Übersprechen von der Lichtsignalquelle auf den Lichtsignaldetektor dadurch verhindert, daß der dritte und vierte Zweig der Lichtwellenleiteranordnung hinter den Stoppbandfiltern so ausgebildet sind, daß Licht der Sendewellenlänge im dritten und vierten Zweig nicht ausbreitungsfähig ist. So sind in einem Lichtwellenleiter mit einer begrenzten Querschnittsfläche nur solche Wellen ausbreitungsfähig, deren Wellenlänge kleiner ist als die sogenannte Cut-Off-Wellenlänge des jeweiligen Lichtwellenleiters, die unter anderem vom Querschnitt des Lichtwellenleiters abhängt. Die Dicke des Lichtwellenleiters im dritten und vierten Zweig der Lichtwellenleiteranordnung hinter den Stoppbandfiltem wird deshalb so gewählt, daß die Sendewellenlänge unterhalb der Cut-Off-Wellenlänge, die Empfangswellenlänge dagegen oberhalb der Cut-Off-Wellenlänge liegt. In diesem Fall wird das von der Lichtsignalquelle emittierte Licht von dem Koppler zwar auch in den dritten und vierten Zweig eingekoppelt, ist allerdings dort hinter den Stoppbandfiltem nicht ausbreitungsfähig und erreicht demzufolge nicht den Lichtsignaldetektor.

Zu vollständigen, mit derartigen Transceivem ausgerüsteten Systemen gehören komplementäre Transceiver. Sendet der zuvor beschriebene Transceiver bei einer Wellenlänge von 1,5 µm und empfängt er bei einer Wellenlänge von 1,3 µm, muß der komplementäre Transceiver die Wellenlänge von 1,3 µm zum Senden und die Wellenlänge von 1,5 µm zum Empfangen verwenden. Auch ein solcher komplementärer Transceiver zählt zu den Ausbildungsformen der Erfindung. Dazu werden in einer Schaltung mit Lichtsignalquelle am zweiten Zweig und Lichtsignaldetektoren am dritten und / oder vierten Zweig der Lichtwellenleiteranordnung dieser dritte oder vierte Zweig mit einem Absorptionselement versehen, das aus einer Halbleiterschicht besteht, die die Wellenleiter in dem an die Lichtsignaldetektoren angrenzenden Bereiche bedecken. Das Halbleitermaterial ist für die Wellenlänge 1,5 µm transparent, absorbiert jedoch die Lichtwellen mit 1,3 µm Wellenlänge. Dabei handelt es sich z.B. um eine quaternäre Schicht mit einer Bandlücke entsprechend 1,4 µm. Mit dieser Anordnung wird ebenfalls eine zweistufige Filterung realisiert, die vergleichbare Werte für die optische Übersprechdämpfung gewährleistet.

In einer bevorzugten Ausführungsform der Erfindung ist der Lichtsignaldetektor eine Photodiode. Eine vorrangige Methode zur Reduzierung des optischen Übersprechens sieht z.B. für eine Transceiver-Schaltung der zuvor zuerst erläuterten Art vor, die Photodiode aus einem Halbleitermaterial zu fertigen, das gegen Licht der Sendewellenlänge unempfindlich ist. So weist beispielsweise eine bestimmte Zusammensetzung der Halbleiterverbindung InGaAsP eine Energiebandlücke auf, die einer Wellenlänge von 1400 nm entspricht. Beträgt nun die Sendewellenlänge 1500 nm, so reicht die Quantenenergie der Strahlung der Lichtsignalquelle nicht aus, um die Energiebandlücke der Photodiode zu überbrücken und ein Detektorereignis auszulösen. Das von der Lichtsignalquelle emittierte Licht wird deshalb von der Photodiode nicht detektiert. Beträgt die Empfangswellenlänge dagegen 1300 nm, so ist die dieser Wellenlänge entsprechende Quantenenergie größer als die Energiebandlücke des Halbleitermaterials, so daß Licht der Empfangswellenlänge von der Photodiode detektiert wird. Bei dieser Möglichkeit der Reduzierung des optischen Übersprechens müssen also zwei Voraussetzungen erfüllt sein. Zum einen muß die Sendewellenlänge größer sein als die Empfangswellenlänge und zum anderen muß die Wellenlänge, die der Energiebandlücke des verwendeten Halbleitermaterials entspricht, zwischen Sende- und Empfangswellenlänge liegen.

Bei einer Variante von eigener erfinderischer Bedeutung ist ein Lichtsignaldetektor in eine erste Sektion aus quatemärem Material und eine, damit in Reihe liegende zweite Sektion aus temärem Material gegliedert. Die zweite Sektion detektiert Lichtsignale der Wellenlänge 1500nm und übernimmt damit die Aufgaben des Empfängers für bidirektionale Dienste. Die erste Sektion detektiert zusätzlich empfangene Lichtsignale bei 1300 nm, die für Verteildienste, Signalisierungen oder dergleichen den bidirektionalen Diensten überlagert werden können.

Darüberhinaus besteht die Gefahr, daß das von der Lichtsignalquelle emittierte Licht in dem Chip gestreut wird und auf diese Weise den Lichtsignaldetektor erreicht und zu einer Verfälschung des Ausgangssignals führt. In einer Variante der Erfindung sind deshalb seitlich neben der Lichtsignalquelle und/oder den Lichtsignaldetektoren, gegebenenfalls als Randstruktur der Chipgrenze ausgebildete Absorber angeordnet, die Licht der Sendewellenlänge absorbieren. Die Absorber können beispielsweise aus einem besonderen Halbleitermaterial bestehen, das Licht der Sendewellenlänge absorbiert.

In einer anderen Variante der Erfindung von eigener schutzwürdiger Bedeutung ist die erfindungsgemäße Schaltung als optoelektronische Add/Drop-Schaltung ("Add/Drop-OEIC") ausgeführt. Diese als MACH-ZEHNDER-Anordnung zusammengesetzte Schaltung hat die Aufgabe, aus einem Lichtwellenleiter Lichtsignale einer bestimmten Wellenlänge auszukoppeln und zu detektieren ("Drop-Funktion") und anschließend ein neues Signal mit dieser Wellenlänge in den Lichtwellenleiter einzukoppeln ("Add-Funktion"). Hierzu verfügt diese Schaltung über eine Empfangsschnittstelle, an die ein erster Lichtwellenleiter zum Empfang von Lichtsignalen angeschlossen wird, und eine Sendeschnittstelle, an die ein zweiter Lichtwellenleiter zur Übertragung gesendeter neuer Lichtsignale auf derselben Wellenlänge oder noch nicht detektierter Lichtsignale auf einer anderen Wellenlänge angeschlossen wird.

Weiterhin weist dieses Add/Drop-OEIC - wie bei den vorstehend beschriebenen Varianten der Erfindung - eine Lichtwellenleiteranordnung auf, die jedoch jeweils aus mehreren, jeweils in Reihe geschalteten Kopplern mit jeweils paarweise gegenüberliegenden Zweigen besteht. Ein an der Empfangsschnittstelle einlaufendes Lichtsignal wird in dem mit der Empfangsschnittstelle verbundenen Zweig in den ersten optischen Koppler der Reihenscnaltung geführt, der das Licht zu gleichen Teilen in die gegenüberliegenden Zweige einkoppelt. Dort wird das Lichtsignal dann in beiden Zweigen an zwei hintereinander angeordneten wellenlängenselektiven Reflektoren reflektiert, die auf die jeweilige Empfangswellenlänge abgestimmt sind, und durchläuft diesen Koppler ein zweites Mal in entgegengesetzter Richtung, wobei das Lichtsignal in den anderen Zweig des Paares eingekoppelt wird, dessen einer Zweig mit der Empfangsschnittstelle verbunden ist. Dort ist die Photodiode angeordnet. Vorzugsweise ist für eine polarisationsabhängige Funktionsweise der Komponente in jedem Zweig ein Gitter für TE-Lichtpolarisation und ein Gitter für TM-Lichtpolarisation angeordnet.

Stimmt die Wellenlänge des von der Photodiode zu detektierenden Lichtsignals dagegen nicht mit der Wellenlänge überein, auf die die wellenlängenselektiven Reflektoren abgestimmt sind, so durchläuft das Lichtsignal die beiden Reflektoren nahezu ungeschwächt und wird vom zweiten Koppler der Reihenschaltung zu einem Summensignal überlagert und in einen der beiden gegenüberliegenden Zweige an der anderen Seite des zweiten Kopplers eingekoppelt. Dieser Zweig ist mit einer Sendeschnittstelle verbunden, an die ein zweiter "externer" Lichtwellenleiter angeschlossen ist. Ein Lichtsignal, dessen Wellenlänge nicht mit der Reflexionswellenlänge der wellenlängenselektiven Reflektoren übereinstimmt, durchläuft also die Add/Drop-Schaltung im Idealfall ungeschwächt und wird an der Sendeschnittstelle in den zweiten, externen Lichtwellenleiter eingekoppelt.

Der andere Zweig des zuvor genannten Paares ist mit einer Laserdiode verbunden, die im Sendebetrieb ein Lichtsignal emittiert, wobei die wellenlängenselektiven Reflektoren auf die Wellenlänge dieser Laserdiode abgestimmt sind. Das von der Laserdiode emittierte Lichtsignal durchläuft also zunächst den zweiten Koppler der Reihenschaltung und wird dort zu gleichen Teilen in die beiden gegenüberliegenden Zweige auf seiner anderen Seite eingekoppelt. Dort wird das Signal an den beiden wellenlängenselektiven Reflektoren nahezu vollständig reflektiert und durchläuft den zweiten Koppler ein weiteres Mal in entgegengesetzter Richtung, wobei im Idealfall die gesamte Intensität des zu sendenden Lichtsignals in denjenigen Zweig eingekoppelt wird, der mit der Sendeschnittstelle verbunden ist.

In einer Variante der Erfindung von eigener schutzwürdiger Bedeutung sind mehrere Add/Drop-Schaltungen als Stufen kaskadiert, wobei jeweils die Empfangsschnittstelle der nachgeschalteten Stufe mit der Sendeschnittstelle der vorgeschalteten Stufe verbunden ist. Die wellenlängenselektiven Reflektoren der einzelnen Stufen sind dabei auf unterschiedliche Wellenlängen abgestimmt, so daß in jeder Stufe jeweils ein Kanal mit einer bestimmten Wellenlänge detektiert ("Drop") und in der jeweils nachgeschalteten Stufe mit einem neuen Signal beschickt ("Add") werden kann.

In einer weiteren Variante der Erfindung von eigener schutzwürdiger Bedeutung sind die wellenlängenselektiven Reflektoren als Gitter-Reflektoren ausgeführt, wobei die Wellenleiteroberfläche als Bragg-Gitter ausgebildet ist. Die einzelnen Zweige der Wellenleiteranordnung sind - wie bereits oben beschrieben - auf einem Chip zusammen mit der Lichtsignalquelle und dem Lichtsignaldetektor integriert. Der Gitter-Reflektor wird nun dadurch gebildet, daß die Grenzfläche zwischen dem Lichtwellenleiter und dem umgebenden Material korrugiert, also wellenförmig ist.

Das optische Verhalten eines derartigen Gitter-Reflektors ist dabei abhängig von der Wellenlänge des einfallenden Lichts. Ist die Wellenlänge des Lichts gleich dem doppelten Abstand zwischen zwei Wellenbergen der korrugierten Struktur, der sogenannten Korrugationsperiode, so wirkt der Gitter-Reflektor als Bragg-Reflektor und reflektiert nahezu hundert Prozent der einfallenden Strahlung. Weicht die Wellenlänge der einfallenden Strahlung dagegen von der doppelten Korrugationsperiode ab, so wird das Licht mehr oder weniger ungeschwächt durchgelassen. Durch geeignete Formung der Grenzfläche zwischen dem Lichtwellenleiter und dem umgebenden Material läßt sich auf diese Weise die Wellenlänge einstellen, bei der der Gitter-Reflektor das einfallende Licht reflektiert. Die Reflexions- bzw. Transmissionscharakteristik des Gitter-Reflektors kann dabei durch die Gitterlänge und die Tiefe der Wellentäler, also die Welligkeit der Grenzschicht, eingestellt werden.

In einer Variante der Erfindung ist - wie bereits oben beschrieben - vor dem Lichtsignaldetektor ein Stoppbandfilter angeordnet, um das optische Übersprechen von der Lichtsignalquelle auf den Lichtsignaldetektor zu reduzieren. In einer Ausführungsform der Erfindung ist auch dieses Stoppbandfilter als Bragg-Gitter ausgeführt.

Eine Variante der Erfindung besonderer Art ist auf die Abstimmbarkeit der wellenlängenselektiven Gitteranordnungen und der einmodigen Laserdioden gerichtet. Sind diese in ihrer unmittelbaren Nähe mit Heizelementen versehen, lassen sich durch Temperaturänderung die Filterkennlinien bzw. die Emissionswellenlängen mit zunehmender Temperatur in Richtung zunehmender Wellenlängen und umgekehrt verschieben. Derartige Heizelemente können bereits vorhandene - zuvor schon erwähnte - Absorberschichten bedeckend angeordnet sein. Diese Maßnahme ermöglicht auch, eventuelle Abweichungen in den Eigenschaften der Komponenten infolge unvermeidbarer Herstellungstoleranzen auszugleichen und die Gesamtfunktion auf diese Weise zu optimieren. In kaskadierten Komponenten kommt einer derartigen Trimmbarkeit wellenlängenselektiver Elemente besondere Bedeutung zu. Die Heizelemente können in integrierten Schaltungen in eigenen Prozeßschritten, parallel zu den betreffenden Wellenleiterstrukturen verlaufend ausgebildet werden. Der Effekt der Verschiebung von Emissionswellenlängen monomodiger Laser liegt bei ca. 0,1 mm/ °C.

Während sich die vorstehenden Erläuterungen im wesentlichen auf integrierte Schaltungen gemäß der Erfindung beziehen, wird folgend näher auf die hauptsächlichen Unterschiede eingegangen, die für hybriden Schaltungsaufbau zu beachten sind.

Bei den vorstehend beschriebenen Ausführungsformen der Erfindung handelt es sich um integrierte optoelektronische Schaltungen, bei denen die wellenlängenselektiven Filter als Reflektoren, z. B. Gitter- bzw. Bragg-Reflektoren wie auch als Stoppbandfilter, ausgebildet sind. Die eingangs erwähnte Alternative zum integrierten Schaltungsaufbau, die nachfolgend näher beschrieben wird, sieht vor, daß im hybriden planar-optischen Aufbau die wellenlängenselektiven Filter einer Lichtwellenleiteranordnung aus dielektrischen Filterplatten bestehen. Selbstverständlich sind auch hier die Lichtsignaldetektoren einerseits und die Lichtsignalquelle andererseits zur Verringerung des elektrischen Übersprechens auf gegenüberliegenden Seiten der optischen Koppler angeordnet.

Die zuvor genannten Filterplatten oder Spiegelplättchen werden in der Interferometrie als Normalmaß eingesetzt und dort mit "Etalon" bezeichnet. Es ist bekannt, diese auch in WDM (wavelength division multiplexing) - Transceivern einzusetzen (vergleiche Y. Yamada et al., OFC '95, Postdeadlinepaper 12).

Durch diese Variante der Erfindung wird den Schaltungsaufbauten gemäß den vorstehend erläuterten Ausführungsformen mit den Funktionen als Sender-/Empfängerbaustein sowie als Add/Drop-Multiplexer/Demultiplexer für Sender und Empfänger eine weitere Gattung hinzugefügt, in der die Architekturen der passiven und aktiven Komponenten nun allerdings nicht mehr als integrierte Schaltung, sondern als Einzelkomponenten einer hybriden planaren Lichtwellenschaltung (PLC = planar lightwave circuit) zur Anwendung kommen können. In derartigen PLC lassen sich die planar - optischen Wellenleiternetzwerkschaltungen und die planaren optoelektronischen Laser- und Phototdetektorschaltungen durchaus jede für sich in integrierter Technik aufbauen.

Von wesentlicher Bedeutung ist hierbei die Vereinfachung der Architekturen bezüglich der wellenlängenselektiven Filter. Sämtliche planar-optische Wellenleiternetzwerkschaltungen sind im wesentlichen unabhängig vom vorgesehenen Wellenlängenbreich nach übereinstimmendem Prinzip ausbildbar. Ihre Konfektionierung erfolgt durch Hinzufügen der jeweils spezifischen planaren optoelektronischen Laserdioden- und/oder Photodioden-Schaltkreise.

Zur Funktionsweise der optoelektronischen Schaltungen und deren Komponenten, die auch bei der dieser Variante der Erfindung zum Einsatz gelangen, wird auf die obenstehend gemachten Ausführungen verwiesen. Dies betrifft insbesondere MMI - Koppler (MMI: Multi-Mode-Interference), Photodioden als Lichtsignaldetektoren, auch solche, die im wesentlichen transparent für Licht einer ersten Wellenlänge und absorbierend für Licht einer zweiten Wellenlänge sind, und einmodige Laserdioden als Lichtsignalquellen. Aufgrund der polarisationsunabhängigen Wirkungsweise der Spiegelplättchen können im Vergleich zu den zuvor erläuterten Ausführungsformen alle Vorkehrungen entfallen, die zu einer getrennten Beeinflussung der TE- und TM-Polarisation des Lichts vorzusehen sind.

Eine besonders vorteilhafte Ausführungsform sieht vor, daß Grundzellen planar-optischer Wellenleitemetzwerke in Silica-on-Silicon-Technologie und Grundzellen planar-optoelektronischer Laser- und Photodioden-Schaltkreise in InP-Technologie aufgebaut und auf einer Trägerplatte angeordnet sind. Derartige Grundzellen beruhen auf erprobten Technologien, ermöglichen selbst bei kleineren Stückzahlen einen ökonomisch vertretbaren Herstellungsaufwand und eignen sich auch für Polymerwellenleitertechniken, die sich derzeit noch in der Entwicklung befinden.

Die Wellenleiter dritter und vierter Zweige zweier in Reihe geschalteter Koppler einer Stufe der Lichtwellenleiteranordnung verlaufen parallel zueinander und führen jeweils dieselben Wellenlängenanteile des optischen Signals. Daraus ergibt sich die zweckmäßige Möglichkeit, die Filter im dritten und vierten Zweig der Lichtwellenleiteranordnung als einstückige dielektrische Filterplatte auszubilden.

Diese schmalbandig reflektierenden, dünnen optischen Filterplatten sind auf einfache und wirksame Weise anzuordnen und zu befestigen, wenn die Trägerplatte mit einem die Filterplatte halternden Sägeschlitz versehen ist. Die Trägerplatte enthält zugleich die planaren Wellenleiter, ist Chipträger für die Photodioden- und den Laserdioden-Schaltkreis und nimmt externe Glasfasern in einer V-Nut auf. Der Sägeschlitz ist so auszuführen, daß die Schnittflächen zu den planaren Wellenleitern optische Qualität aufweisen. Die Filterplatten lassen sich mit einem optischen Kleber fixieren, der möglichst den gleichen Brechungsindex wie das Material der planar-optischen Wellenleitemetzwerkschaltung und den der Filterplatte aufweist. Dann treten keine störenden Reflexionen und Streuungen auf.

Bezüglich der bereits vorstehend behandelten Funktionen für Add/Drop-Komponenten ergibt sich auch für Ausführungsformen der hier behandelten hybriden Variante ein besonders vorteilhafter modularer Aufbau, bei dem eine Mach-Zehnder-Anordnung zusammengesetzt ist aus mindestens drei Grundzellen, nämlich zwei in Reihe geschalteten passiven Grundzellen planar-optischer Wellenleitemetzwerke - z. B. MMI-Koppler mit je vier Zweigen - sowie mit dazwischen angeordneter Filterplatte und mindestens einer optoelektronischen Grundzelle, nämlich einem Laserdioden-Schaltkreis oder einem Photodioden-Schaltkreis. Hierbei ist insbesondere zu berücksichtigen, daß unabhängig von der gewünschten Stufenzahl in kaskadierten Stufen die erste Stufe einen Photodioden-Schaltkreis, die letzte Stufe einen Laserdioden-Schaltkreis und alle dazwischenliegenden Stufen jeweils beide Arten dieser Schaltkreise aufweisen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Figur 1: als ein bevorzugtes Ausführungsbeispiel der Erfindung einen integrierten optoelektronischen bidirektionalen Transceiver als Blockschaltbild,
- Figur 2: den Transceiver aus Figur 1 in perspektivischer Darstellung,
- Figur 3: eine integrierte optoelektronische Mehr-Kanal-Add-Drop-Schaltung in kaskadierter Ausführung als Blockschaltbild,
sowie für hybride Schaltungsaufbauten
- Figur 4: einen Empfängerbaustein,
- Figur 5: einen Empfänger-/Senderbaustein,
- Figur 6: einen Senderbaustein,
- Figur 7: einen bidirektionalen Empfänger-/Senderbaustein und
- Figur 8: den Baustein gemäß Figur 7 in perspektivischer Darstellung.

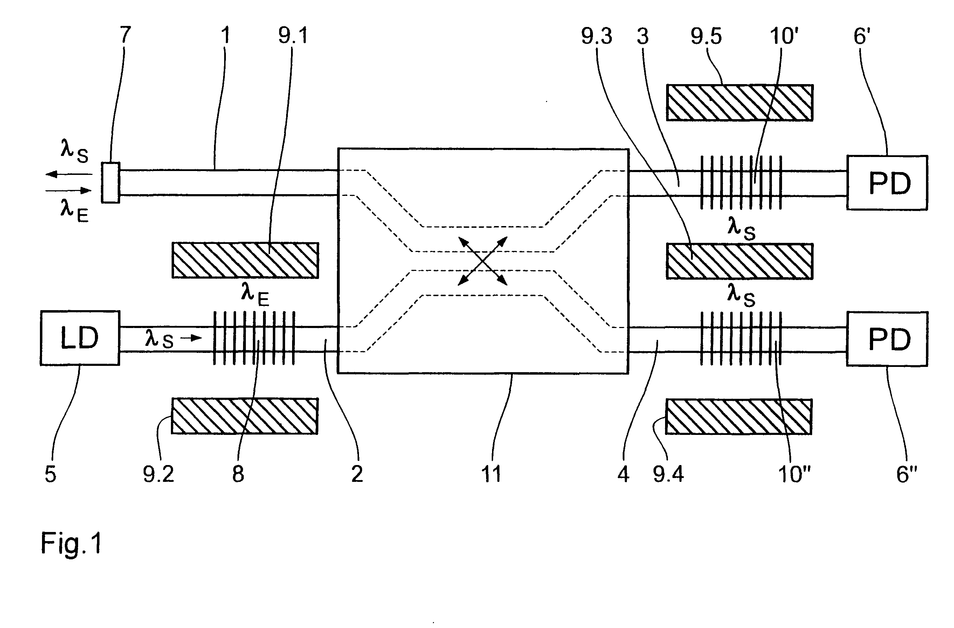

Der in Figur 1 dargestellte Transceiver dient zur Übertragung von Daten über einen gemeinsamen externen Lichtwellenleiter und ermöglicht gleichzeitig einen Sende- und Empfangsbetrieb. Hierzu wird das Wellenlängen-Multiplex-Verfahren angewendet, d.h. der Empfang von Daten erfolgt z.B. mit einer Wellenlänge von λ_{E}=1300 nm, während dementsprechend auf einer Wellenlänge von λ_{S}=1500 nm gesendet wird. Dadurch können die Sende- und die Empfangsdaten jederzeit getrennt verarbeitet werden.

Zur Generierung der zu sendenden Lichtsignale weist der Transceiver eine Laserdiode **5** auf, während zur Detektion von Lichtsignalen zwei Photodioden **6', 6"** vorgesehen sind. Es kann sich auch um eine großflächige Photodiode **PD** handeln, die das Licht, das ihr über zwei Lichtwellenleiter- Zweige **3, 4** (nachfolgend "Zweig" genannt) eines Kopplers **11** zugeführt wird, detektiert. Die gesamte Schaltung ist monolithisch integrierbar.

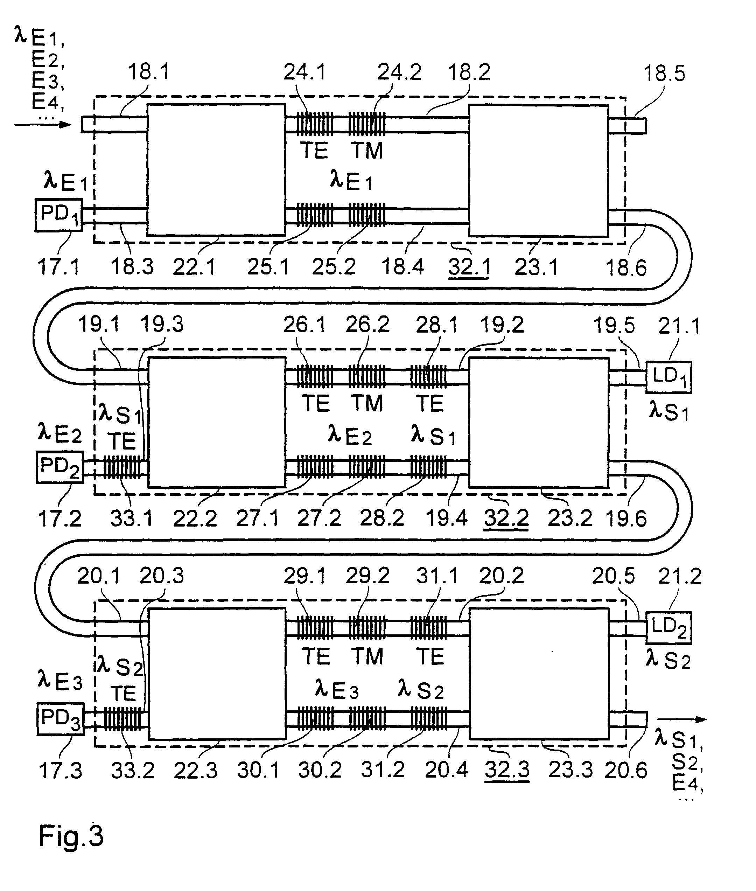

Weiterhin weist der Transceiver eine Schnittstelle **7** auf, an der der externe Lichtwellenleiter angeschlossen ist und die zu sendenden Lichtsignale ausgekoppelt bzw. die zu empfangenden Lichtsignale eingekoppelt werden. Diese Schnittstelle **7** ist mit einem Modentransformator **12** (vgl. Fig.3) versehen, der eine möglichst verlustarme und justier-tolerante Lichtkopplung gewährleistet.

Die Schnittstelle **7,** die Photodioden **6', 6"** sowie die Laserdiode **5** sind an eine Lichtwellenleiteranordnung angeschlossen, die eine Weiterleitung der von der Laserdiode **5** emittierten Lichtsignale zur Schnittstelle **7** und umgekehrt eine Weiterleitung der an der Schnittstelle **7** eingehenden Lichtsignale zu den Photodioden **6', 6"** ermöglicht. Die Lichtwellenleiteranordnung besteht aus vier Zweigen **1, 2, 3, 4,** wobei der erste Zweig **1** mit der Schnittstelle **7,** der zweite Zweig **2** mit der Laserdiode **5** und der dritte und vierte Zweig **3** bzw. **4** mit jeweils einer Photodiode **6'** bzw. **6"** verbunden ist.

Die vier Zweige **1, 2, 3, 4** der Lichtwellenleiteranordnung sind durch einen 3dB-MMI-Koppler **11** (MMI - Multi-Mode-Interference) verbunden, der ein aus einem seiner Zweige kommendes Lichtsignal zu gleichen Teilen in die beiden Zweige an der gegenüberliegenden Seite des Kopplers **11** einkoppelt. So wird beispielsweise ein aus dem zweiten Zweig **2** in den Koppler **11** eintretendes Lichtsignal zu gleichen Teilen in den dritten Zweig **3** und den vierten Zweig **4** eingekoppelt. Die beiden Teil-Lichtsignale im dritten und vierten Zweig **3** bzw. **4** weisen dabei einen Gangunterschied von ^{λ}/₄ auf. Liegt nun an der Schnittstelle **7** ein Lichtsignal der Wellenlänge λ_{E} an, so wird dieses Lichtsignal zunächst in den ersten Zweig **1** eingekoppelt und durchläuft dann den 3dB-MMI-Koppler **11,** wobei 50% der Intensität in den dritten Zweig **3** und 50% der Intensität in den vierten Zweig **4** eingekoppelt wird.

Sowohl im dritten Zweig **3** als auch im vierten Zweig **4** ist jeweils ein als wellenlängenselektiver Gitterreflektor ausgebildetes Stoppbandfilter **10', 10"** angeordnet. Diese Gitterreflektoren **10', 10"** sind so ausgebildet, daß Licht der Sendewellenlänge λ_{S} reflektiert wird, während Licht mit einer anderen Wellenlänge nahezu ungeschwächt durchgelassen wird. Das empfangene Lichtsignal mit der Wellenlänge λ_{E} passiert also die Gitterreflektoren **10', 10"** nahezu ungeschwächt und wird von dahinter angeordneten Photodioden **6', 6"** detektiert. Außerdem können die Lichtwellenleiter des dritten Zweiges **3** und des vierten Zweiges **4** im Bereich zwischen den Stoppbandfiltern **10', 10"** und den Photodioden **6', 6"** mit einer begrenzten Querschnittsflache ausgebildet sein, in denen nur solche Lichtwellen ausbreitungsfähig sind, deren Wellenlänge kleiner ist als die sogenannte Cut-off-Wellenlänge.

Das von der Laserdiode **5** emittierte Lichtsignal mit der Wellenlänge λ_{S} tritt zunächst in den zweiten Zweig **2** der Lichtwellenleiteranordnunmg ein und passiert den wellenlängenselektiven Gitter-Reflektor **8** nahezu ungeschwächt, da dieser auf die Empfangswellenlänge λ_{E} abgestimmt ist. Anschließend durchläuft das Lichtsignal den 3dB-MMI-Koppler **11,** wobei jeweils 50% des Lichtsignals in den dritten und vierten Zweig **3** bzw. **4** eingekoppelt wird.

Das von der Laserdiode **5** emittierte Lichtsignal wird im dritten und vierten Zweig **3** bzw. **4** nahezu vollständig an den wellenlängenselektiven Gitter-Reflektoren **10', 10"** reflektiert und durchläuft den 3dB-MMI-Koppler **11** ein weiteres Mal in entgegengesetzter Richtung. Hierbei wird nahezu die gesamte Intensität des an den Gitter-Reflektoren **10', 10"** reflektierten Lichtsignals in den ersten Zweig **1** eingekoppelt und schließlich an der Schnittstelle **7** in den externen Lichtwellenleiter ausgekoppelt. Es ist in diesem Zusammenhang wichtig, daß das an den wellenlängenselektiven Gitter-Reflektoren **10', 10"** reflektierte Licht nicht zurück in den mit der Laserdiode **5** verbundenen zweiten Zweig **2** eingekoppelt wird, da dies zu einer Störung des einmodigen Lasers **5** führen könnte. Zur zusätzlichen Sicherheit in dieser Hinsicht dient der zuvor erwähnte Gitter-Reflektor **8.**

Seitlich neben dem zweiten, dem dritten und dem vierten Zweig **2** bzw. **3** bzw. **4** sind Absorber **9.1, 9.2, 9.3, 9.4** und **9.5** angeordnet, die aus einer Halbleiterverbindung bestehen, die Licht der Sendewellenlänge λ_{S} absorbiert. Hierdurch wird verhindert, daß Streulicht der Laserdiode **5** die Photodioden **6', 6"** erreicht, was zu einer Störung des elektrischen Ausgangssignals der Photodioden **6', 6"** führen würde. Diese Absorber können zudem baulich kombiniert mit Heizelementen versehen sein, die eine temperaturabhängige Abstimmbarkeit wellenlängenselektiver Komponenten ermöglichen.

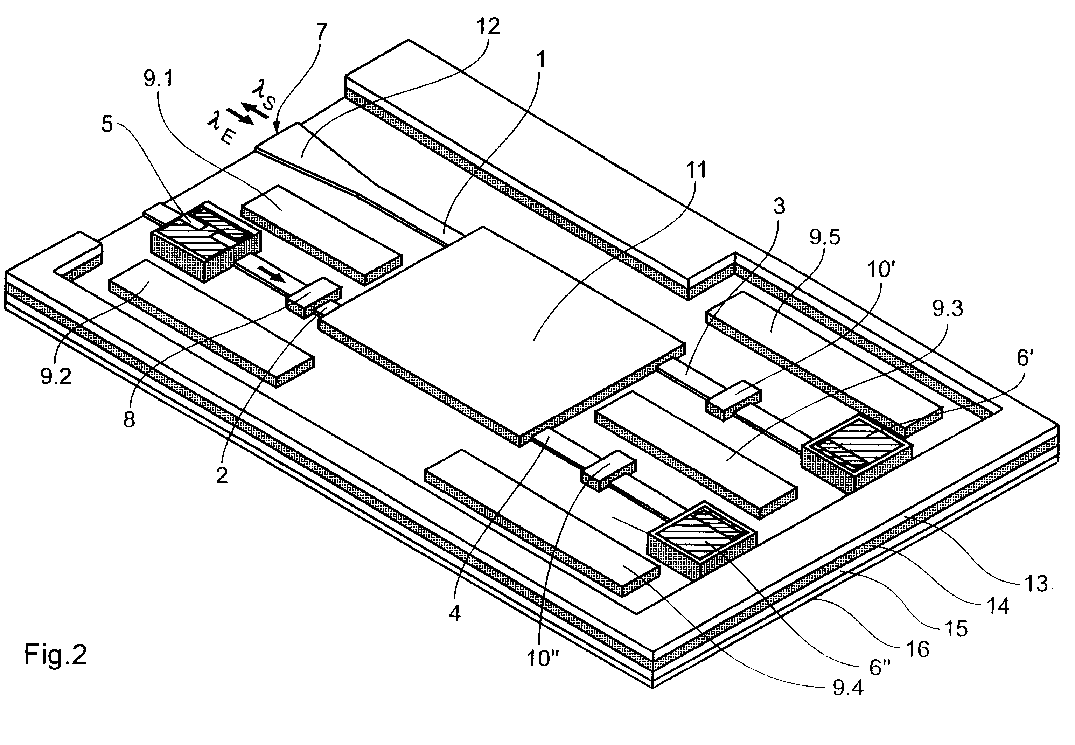

In **Figur 2** ist der Aufbau des Multiplex-Transceivers aus Figur 1 perspektivisch dargestellt. Der Transceiver ist als integrierte Schaltung ausgeführt, die aus mehreren Schichten (Layers) **13, 14, 15, 16** aufgebaut ist, die während des Herstellungsprozesses nacheinander aufgebracht werden. Die integrierte Schaltung ist hierbei aufgerissen schematisch dargestellt, um den Schichtverlauf im Inneren der Schaltung zu verdeutlichen.

Die Photodioden **6', 6"** und die Laserdiode **5** bilden innerhalb der Schichtstruktur Inseln, die bis an die Oberfläche durchgeführt sind, so daß die Laserdiode **5** und die Photodioden **6', 6"** an der Oberseite elektrisch direkt kontaktiert werden können.

Die Lichtwellenleiteranordnung besteht im wesentlichen aus den vier Zweigen **1, 2, 3, 4** des Kopplers **11,** wobei der erste Zweig **1** an die Außenseite der Schaltung führt und dort die Schnittstelle **7** zum Anschluß des externen Lichtwellenleiters bildet. Der zweite Zweig **2** ist mit der Laserdiode **5** verbunden, der dritte und der vierte Zweig **3** bzw. **4** sind an jeweils eine Photodiode **6', 6"** angeschlossen. Auf diese Weise können zum einen die von der Laserdiode **5** emittierten Lichtsignale zur Schnittstelle **7** und zum anderen die an der Schnittstelle **7** empfangenen Lichtsignale zu den Photodioden **6', 6"** weitergeleitet werden.

Der in der Mitte der Schaltung angeordnete 3dB-MMI-Koppler **11** verbindet die vier Zweige **1, 2, 3, 4** miteinander und koppelt ein aus einem Zweig in den Koppler **11** eintretendes Lichtsignal jeweils zu gleichen Teilen in die Zweige an der gegenüberliegenden Seite des Kopplers **11** ein. So wird beispielsweise Licht, das aus dem ersten Zweig **1** in den 3dB- Koppler **11** eintritt, sowohl in den dritten Zweig **3** als auch in den vierten Zweig **4** eingekoppelt.

Im Empfangsbetrieb tritt ein Lichtsignal der Wellenlänge λ_{E} an der Schnittstelle **7** in die integrierte Schaltung ein und wird vom ersten Zweig **1** der Lichtwellenleiteranordnung zum 3dB-Koppler **11** geführt. Der 3dB-Koppler **11** koppelt dann 50% dieses Lichtsignals in den dritten Zweig **3** und 50% in den vierten Zweig **4** ein. Das Lichtsignal mit der Wellenlänge λ_{E} passiert die im dritten und vierten Zweig **3** bzw. **4** angeordneten wellenlängenselektiven Reflektoren **10', 10"** nahezu ungeschwächt, da diese auf die Sendewellenlänge λ_{S} abgestimmt sind. Schließlich erreicht das Lichtsignal dann die beiden Photodioden **6', 6"** und wird detektiert.

Im gleichzeitig möglichen Sendebetrieb emittiert die Laserdiode **5** ein Lichtsignal der Wellenlänge λ_{S}, das zunächst im zweiten Zweig **2** der Lichtwellenleiteranordnung zum 3dB-MMI-Koppler **11** geführt wird, der das Lichtsignal zu gleichen Teilen in den dritten und vierten Zweig **3** bzw. **4** einkoppelt. Dort wird das Lichtsignal der Wellenlänge λ_{S} an den wellenlängenselektiven Reflektoren **10', 10"** nahezu vollständig reflektiert und durchläuft den Koppler **11** ein zweites Mal in entgegengesetzter Richtung. Hierbei wird nahezu die gesamte Intensität des zu sendenden Lichtsignals in den ersten Zweig **1** eingekoppelt und dort zur Schnittstelle **7** geführt und gesendet.

Der Durchmesser des externen Lichtwellenleiters ist wesentlich größer als die Breite des ersten Zweiges **1** der Lichtwellenleiteranordnung. Dies führt ohne besondere Maßnahmen im Sendebetrieb der Schaltung zu einem relativ geringen Kopplungsfaktor, d.h. es wird dann von dem zu sendenden Lichtsignal nur eine relativ geringe Intensität in den externen Lichtwellenleiter eingekoppelt. Der erste Zweig **1** ist deshalb unmittelbar vor der Schnittstelle als Modentransformator **12** ausgebildet. Ein derartiger Modentransformator **12** weist eine sich entlang der Lichtausbreitungsrichtung ändernde Breite des Lichtwellenleiters auf. Hierdurch wird der Kopplungsfaktor zwischen dem externen Lichtwellenleiter und dem ersten Zweig **1** der Lichtwellenleiteranordnung erhöht.

Die wellenlängenselektiven Reflektoren **10', 10"** sind als Bragg-Reflektoren ausgeführt. Hierzu ist die Grenzfläche zwischen dem Lichtwellenleiter und dem umgebenden Material im Bereich eines solchen Bragg-Reflektors als korrugierte Struktur, also wellig, ausgebildet. Die Wellenberge bzw. Wellentäler sind dabei äquidistant und verlaufen im wesentlichen rechtwinklig zur Erstreckungsrichtung des Lichtwellenleiters. Der Abstand zwischen zwei Wellenbergen bzw. zwischen zwei Wellentälern - die sogenannte Korrugationsperiode - ist bei den Bragg-Reflektoren **10', 10"** so gewählt, daß die Sendewellenlänge λ_{S} reflektiert wird.

Im Zusammenhang mit der weiter vorstehenden Erläuterung der Ausbildung von Wellenleitern im dritten und vierten Zweig **3** bzw. **4** mit einer begrenzten Querschnittsfläche ist dieser Bereich der Wellenleiter in unmittelbarer Nähe der Photodioden **6', 6"** unter einem anderen Aspekt von Bedeutung. Werden diese Bereiche der Wellenleiter **6', 6"** mit einem Absorptionselement versehen, das z.B. aus einer Schicht quaternären Halbleitermaterials mit einer Bandlücke entsprechend 1,4 µm besteht, läßt sich ein komplementärer Transceiver mit im wesentlichen gleicher Struktur wie in Fig. 2 dargestellt realisieren, der die Wellenlänge von 1,3 µm zum Senden und die Wellenlänge von 1,5 µm zum Empfangen verwendet.

Die in **Figur 3** dargestellte monolithische integrierbare optoelektronische Mehr-Kanal-Add-Drop-Schaltung (Add/Drop-OEIC) ermöglicht es, z.B. drei Kanäle eines Lichtwellenleiters mit unterschiedlichen Wellenlängen λ_{E1}, λ_{E2}, λ_{E3} nacheinander zu detektieren ("Drop") und jeweils anschließend ein neues Signal mit der unmittelbar zuvor detektierten betreffenden Wellenlänge λ_{S1} bzw. **λ**_{S2} in den Lichtwellenleiter einzukoppeln ("Add").

Ein derartiger Add/Drop-OEIC besteht aus drei Stufen **32.1, 32.2, 32.3,** wobei jede Stufe einen Kanal detektiert. Die drei Stufen **32.1, 32.2, 32.3** sind hintereinandergeschaltet, so daß in in einer Stufe jeweils ein Kanal detektiert ("Drop") und in der darauffolgenden Stufe der Kanal mit dieser Wellenlänge mit neuen Informationen ("Add") belegt werden kann.

Jede Stufe **32.1, 32.2, 32.3** weist eine Lichtwellenleiteranordnung mit sechs Zweigen **18.1,..., 18.6; 19.1,..., 19.6** bzw. **20.1,..., 20.6** von Lichtwellenleitern und je zwei 3dB-MMI-Kopplern **22.1,..., 22.3** und **23.1,..., 23.3** auf.

Der erste Zweig **18.1** der ersten Stufe **32.1** dient zum Anschluß des externen Lichtwellenleiters, über den die ankommenden Lichtsignale empfangen werden, während der erste Zweig **19.1, 20.1** der folgenden Stufen **32.2** und **32.3** jeweils zum Anschluß an die sechsten Zweige **18.6** bzw. **19.6** der vorangehenden Stufe **32.1** bzw. **32.2** dient.

Der zweite Zweig **18.3, 19.3, 20.3** ist in jeder Stufe **32.1, 32.2, 32.3** mit einer Photodiode **17.1, 17.2, 17.3** verbunden, wobei jede Photodiode **17.1, 17.2, 17.3** jeweils einen Kanal detektiert. **(Anmerkung :** In Figur 3 sind zweite Zweige mit der Endziffer "3" und dritte Zweige mit der Endziffer "2" der Bezugszeichen versehen.) Der erste 3dB-MMI-Koppler **22.1, 22.2, 22.3** jeder Stufe koppelt ein über einen ersten Zweig **18.1, 19.1, 20.1** oder einen zweiten Zweig **18.3, 19.3, 20.3** der Lichtwellenleiteranordnung eintretendes Lichtsignal jeweils zu gleichen Teilen in die dritten Zweige **18.2, 19.2, 20.2** und die vierten Zweige **18.4, 19.4, 20,4.** ein. So wird beispielsweise ein aus dem ersten Zweig **18.1** kommendes Lichtsignal mit 50 % seiner Intensität in den dritten Zweig **18.2** und mit 50 % der Intensität in den vierten Zweig **18.4** eingekoppelt.

Im dritten Zweig **18.2, 19.2, 20.2** und im vierten Zweig **18.4, 19.4, 20.4** ist jeweils ein wellenlängenselektiver Reflektor **24.1, 24.2, 25.1, 25.2, 26.1, 26.2, 27.1, 27.2, 29.1, 29.2, 30.1, 30.2** angeordnet, wobei diese Reflektoren in der ersten Stufe auf die Wellenlänge λ_{E1} des ersten Kanals, in der zweiten Stufe auf die Wellenlänge λ_{E2} des zweiten Kanals und in der dritten Stufe auf die Wellenlänge λ_{E3} des dritten Kanals abgestimmt sind. Jeder dieser Reflektoren besteht aus wellenlängenselektiven Wellenleiter-Gittern, wobei wegen der Polarisationsabhängigkeit der Gitter für die TE-Mode und die TM-Mode jeweils ein Gitter verwendet wird.

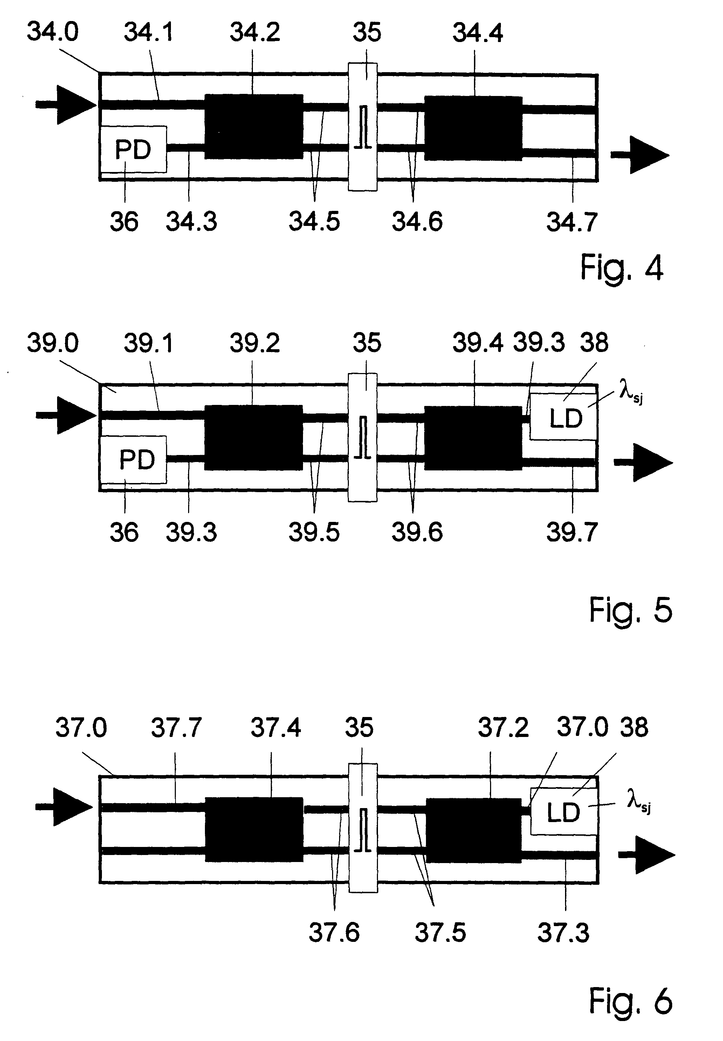

Der dritte Zweig **18.2, 19.2, 20.2** und der vierte Zweig **18.4, 19.4, 20.4** jeder Stufe ist über einen zweiten 3dB-MMI-Koppler **23.1, 23.2, 23.3** mit dem fünften Zweig **18.5, 19.5, 20.5** und dem sechsten Zweig **18.6, 19.6, 20.6** der Lichtwellenleiteranordnung verbunden, wobei der sechste Zweig **18.6, 19.6** der beiden ersten Stufen jeweils mit dem ersten Zweig **19.1, 20.1** der folgenden Stufe verbunden ist, während der sechste Zweig **20.6** der dritten Stufe **32.3** mit dem externen Lichtwellenleiter verbunden ist, über den die Lichtsignale gesendet werden. Es kann stattdessen an dieser Stelle eine letzte Stufe vorgesehen werden (vergleiche auch Figur 6), in der kein Lichtsignal mehr zu detektieren, jedoch ein solches derjenigen Wellenlänge zu generieren ist, die in der vorletzten Stufe detektiert wurde.

Der fünfte Zweig **19.5, 20.5** der Lichtwellenleiteranordnung ist in der zweiten und dritten Stufe **32.2, 32.3** mit einer Laserdiode **21.1, 21.2** verbunden, wobei die Laserdiode **21.1** der zweiten Stufe **32.2** Licht mit der Wellenlänge **λ**_{S1} des ersten Kanals emittiert, während die Laserdiode **21.2** der dritten Stufe **32.3** Licht mit der Wellenlänge λ_{S2} des zweiten Kanals emittiert.

Im dritten Zweig **19.2, 20.2** und im vierten Zweig **19.4, 20.4** der Lichtwellenleiteranordnung ist in der zweiten und dritten Stufe **32.2, 32.3** je ein weiterer wellenlängenselektiver Reflektor **28.1, 28.2, 31.1, 31.2** angeordnet, wobei der Reflektor **28.1, 28.2** der zweiten Stufe **32.2** auf die Wellenlänge λ_{S1} des ersten Kanals und der Reflektor **31.1, 31.2** der dritten Stufe **32.3** auf die Wellenlänge λ_{S2} des zweiten Kanals abgestimmt ist.

An der Eingangsschnittstelle dieses Drei-Kanal-Add/-Drop-OEIC wird aus dem externen Lichtwellenleiter ein Lichtsignal empfangen, das Komponenten mit den Wellenlängen λ_{E1}, λ_{E2}, λ_{E3} der drei Kanäle enthält.

Dieses Signal wird zunächst in den ersten Zweig **18.1** der ersten Stufe **32.1** eingekoppelt und durchläuft den 3dB-MMI-Koppler **22.1,** der dieses Signal zu gleichen Teilen in den dritten und vierten Zweig **18.2, 18.4** der Lichtwellenleiteranordnung einkoppelt. Dort wird der erste Kanal mit der Wellenlänge **λ**_{E1} an den wellenlängenselektiven Reflektoren **24.1, 24.2, 25.1, 25.2** reflektiert und durchläuft den 3dB-MMI-Koppler **22.1** ein zweites Mal in entgegengesetzter Richtung. Hierbei wird dann nahezu die gesamte Intensität des ersten Kanals in den zweiten Zweig **18.3** eingekoppelt und erreicht so die Phototdiode **17.1** der ersten Stufe **32.1.**

Die Kanäle mit den Wellenlängen λ_{E2} bzw. λ_{E3} durchlaufen die wellenlängenselektiven Reflektoren **24.1, 24.2, 25.1, 25.2** dagegen weitgehend ungeschwächt und werden von dem zweiten 3dB-MMI-Koppler **23.1** nahezu vollständig in den sechsten Zweig **18.6** eingekoppelt. Von dort wird das Lichtsignal, das noch den zweiten und dritten Kanal enthält, in den ersten Zweig **19.1** der zweiten Stufe **32.2** eingekoppelt.

Die erste Stufe **32.1** filtert also aus dem Eingangssignal den ersten Kanal mit der Wellenlänge λ_{E1} aus und detektiert diesen. Für Lichtsignale mit einer anderen Wellenlänge ist die erste Stufe **32.1** dagegen weitgehend transparent.

in der gleichen Weise wird in der zweiten Stufe **32.2** der zweite Kanal ausgefiltert und detektiert. So wird das Lichtsignal in der zweiten Stufe **32.2** zunächst durch den ersten 3dB-MMI-Koppler **22.2** in den dritten und vierten Zweig **19.2, 19.4** eingekoppelt. Dort wird dann das Lichtsignal des zweiten Kanals an den wellenlängenselektiven Reflektoren **26.1, 26.2, 27.1, 27.2** reflektiert und durchläuft den 3dB-MMI-Koppler **22.2** ein zweites Mal in entgegengesetzter Richtung. Hierbei wird dann nahezu die gesamte Intensität des zweiten Kanals in den zweiten Zweig **19.3** eingekoppelt und der Photodiode **17.2** der zweiten Stufe **32.2** zugeführt.

Die anderen Lichtsignale passieren die wellenlängenselektiven Reflektoren **26.1, 26.2, 27.1, 27.2** weitgehend ungeschwächt und werden von dem zweiten 3dB-MMI-Koppler **23.2** der zweiten Stufe **32.2** nahezu vollständig in den sechsten Zweig **19.6** eingekoppelt und so der dritten Stufe **32.3** zugeführt.

Der fünfte Zweig **19.5** der zweiten Stufe **32.2** ist mit der Laserdiode **21.1** verbunden, die Licht mit der Wellenlänge λ_{S1} des ersten Kanals emittiert. Dieses Licht wird zunächst in den fünften Zweig **19.5** eingekoppelt und durchläuft den zweiten 3dB-MMI-Koppler **23.2.** Dabei wird jeweils 50 % der Intensität des emittierten Lichts in den dritten Zweig **19.2** und den vierten Zweig **19.4** der Lichtwellenleiteranordnung eingekoppelt und dort an den wellenlängenselektiven Reflektoren **28.1, 28.2** reflektiert. Das von der Laserdiode **21.1** emittierte Lichtsignal durchläuft also den 3dB-MMI-Koppler **23.2** ein zweites Mal in entgegengesetzter Richtung, wobei nahezu die gesamte Intensität in den sechsten Zweig **19.6** eingekoppelt wird und somit die dritte Stufe **32.3** erreicht.

Die zweite Stufe **32.2** filtert also aus dem im ersten Zweig **19.1** eingehenden Lichtsignal den zweiten Kanal aus, detektiert diesen Kanal mit einer Photodiode **17.2** und beschickt den ersten Kanal mittels einer Laserdiode **21.1** mit einem neuen Lichtsignal.

Der sechste Zweig **19.6** der zweiten Stufe ist mit dem ersten Zweig **20.1** der dritten Stufe **32.3** verbunden, die analog zur zweiten Stufe **32.2** aufgebaut ist.

Das in die dritte Stufe **32.3** eintretende Lichtsignal durchläuft zunächst den ersten 3dB-MMI-Koppler **22.3,** wobei jeweils 50 % der Intensität in den dritten und vierten Zweig **20.2** bzw. **20.4** eingekoppelt wird. Dort wird Licht mit der Wellenlänge λ_{E3} des dritten Kanals reflektiert und durchläuft den 3dB-MMI-Koppler **22.3** ein zweites Mal in entgegengesetzter Richtung. Dabei wird nahezu die gesamte Intensität des reflektierten Lichts in den zweiten Zweig **20.3** eingekoppelt und der dritten Photodiode **17.3** zugeführt.

Licht mit einer anderen Wellenlänge passiert die wellenlängeselektiven Reflektoren **29.1, 29.2, 30.1, 30.2** nahezu ungeschwächt und durchläuft den zweiten 3dB-MMI-Koppler **23.3,** der nahezu die gesamte Intensität des durchgelassenen Lichts in den sechsten Zweig **20.6** einkoppelt und so der Ausgangsschnittstelle zuführt, wo das Licht in den externen Lichtwellenleiter ausgekoppelt wird.

Im fünften Zweig **20.5** der dritten Stufe **20.3** ist eine weitere Laserdiode **21.2** angeordnet, die Licht mit der Wellenlänge λ_{S2} des zweiten Kanals emittiert. Dieses Licht durchläuft den zweiten 3dB-MMI-Koppler **23.3,** wobei das von der Laserdiode **21.2** emittierte Lichtsignal zu gleichen Teilen in den dritten und vierten Zweig **20.2** bzw. **20.4** der Lichtwellenleiteranordnung eingekoppelt wird. Im dritten und vierten Zweig **20.2** bzw. **20.4** ist je ein weiterer wellenlängenselektiver Reflektor **31.1, 31.2** angeordnet, der auf die Wellenlänge λ_{S2} des zweiten Kanals abgestimmt ist. Das von der Laserdiode **21.2** emittierte Lichtsignal wird also im dritten und vierten Zweig **20.2** bzw. **20.4** reflektiert und durchläuft den zweiten 3dB-MMI-Koppler **23.3** ein weiteres Mal in entgegengesetzter Richtung, wobei nahezu die gesamte Intensität in den sechsten Zweig **20.6** eingekoppelt und zur Sendeschnittstelle geführt wird.

Zur Verringerung des optischen Übersprechens von den Laserdioden **21.1, 21.2** auf die Photodioden **17.2, 17.3** ist in der zweiten und dritten Stufe **32.2** bzw. **32.3** jeweils im zweiten Zweig **19.3** bzw. **20.3** ein wellenlängenselektiver Reflektor **33.1** bzw. **33.2** angeordnet, der in der zweiten Stufe **32.2** auf die Wellenlänge λ_{S1} des ersten Kanals und in der dritten Stufe **32.3** auf die Wellenlänge λ_{S2} des zweiten Kanals abgestimmt ist.

Die Mehr-Kanal-Add-/Drop-Schaltung ist als optoelektronische monolithisch integrierte Schaltung ausgeführt. Die drei optisch in Reihe geschalteten Stufen **32.1, 32.2, 32.3** sind dabei aufbaumäßig nebeneinander so angeordnet, daß die Photodioden **17.1, 17.2, 17.3** auf der einen Seite des Chips und die Laserdioden **21.1, 21.2** auf der anderen Seite des Chips liegen. Hierdurch wird der Abstand zwischen Photodioden **17.1, 17.2, 17.3** und Laserdioden **21.1, 21.2** maximiert und somit elektrisches Übersprechen verringert. Vor den Photodioden **17.2, 17.3** an den Wellenleiterzweigen **19.3, 20.3** sind zur optischen Entkopplung noch wellenlängenselektive Reflektoren **33.1, 33.2** für die jeweilige Wellenlänge für Sendebetrieb λ_{S1}, λ_{S2} und TE-Polarisation angeordnet. Darüberhinaus wird durch die Anordnung der einzelnen Stufen **32.1, 32.2, 32.3** eine kompakte Bauform der Schaltung erreicht, da die räumliche Erstreckung der einzelnen Stufen **32.1, 32.2, 32.3** in Querrichtung wesentlich geringer ist als in Längsrichtung.

Die folgend beschriebenen Figuren beziehen sich auf Ausführungsformen der Erfindung mit hybridem Aufbau. Bezüglich der Erläuterungen von Funktionsweisen dieser Ausführungsformen, die mit denen der zuvor beschriebenen Ausführungsformen übereinstimmen, wird zur Vermeidung von Wiederholungen auf die vorstehenden Ausführungen verwiesen.

Dem in **Figur 4** dargestellten, in Hybridtechnik aufgebauten PLC-Empfängerbaustein **34.0** ( PLC: planar lightwave circuit) wird ein optisches WDM-Signal (WDM : wavelength division multiplex) zugeführt und von einem Eingangswellenleiter **34.1** in einen ersten 3dB-Koppler **34.2** geleitet. Das Signal gelangt von dort aus zu gleichen Anteilen über zwei parallel verlaufende Verbindungswellenleiter **34.5** an der gegenüberliegenden Seite des 3dB-Kopplers **34.2** zu einer schmalbandig reflektierenden, dünnen optischen Filterplatte **35**. Das an der Filterplatte **35** wellenlängenselektiv reflektierte Signal durchläuft den ersten 3dB-Koppler **34.2** in entgegengesetzter Richtung und sodann einen Zuleitungswellenleiter **34.3,** an den ein Photodioden-Schaltkreis **36** zur Verarbeitung des selektierten optischen Signals angeschlossen ist.

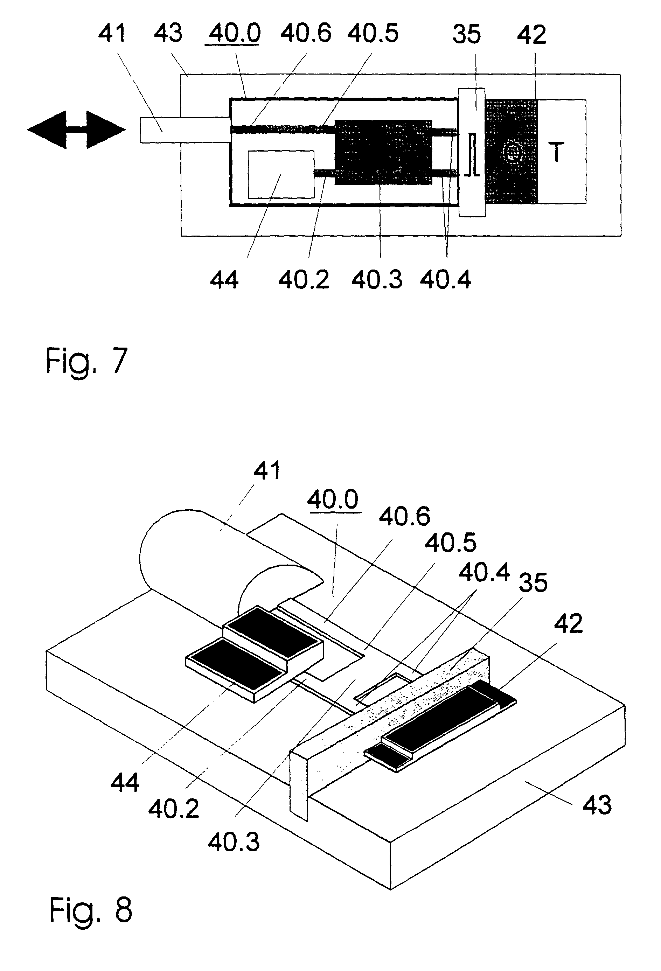

Konstruktive Einzelheiten zur Anordnung und Befestigung der Filterplatte **35** werden im Zusammenhang mit der Beschreibung der Figur 8 näher erläutert.

Die Wellenlängenanteile im WDM-Signal, die von der Filterplatte **35** durchgelassen werden, gelangen in zwei parallel verlaufende Verbindungswellenleiter **34.6** und von dort in einen zweiten 3dB-Koppler **34.4.** In Transmission entsteht somit eine Mach-Zehnder-Interferometer-Struktur. Die zuvor genannten transmittierten Signalanteile stehen an einem Ausgangswellenleiter **34.7** zur Weiterverarbeitung zur Verfügung.

In Analogie zur Beschreibung des PLC-Empfängerbausteins **34.0** wird zunächst der in **Figur 6** dargestellte PLC-Senderbaustein **37.0** behandelt. Das von einem Laserdioden-Schaltkreis **38** abgegebene optische Signal gelangt über einen Zuleitungswellenleiter **37.1** in einen zweiten 3dB-Koppler **37.2,** von dort mit jeweils gleichen Anteilen über Verbindungswellenleiter **37.5** zur Filterplatte **35** und wird dort wellenlängenselektiv reflektiert. Die reflektierten Lasersignale durchlaufen die Verbindungswellenleiter **37.5** und den zweiten 3dB-Koppler **37.2** in entgegengesetzter Richtung und gelangen zu einem WDM-Signal vereinigt in einen Ausgangswellenleiter **37.3.**

Wellenlängenanteile des optischen WDM-Signals, die von der Filterplatte **35** nicht reflektiert werden, können dem PLC-Senderbaustein **37.0** über einen Eingangswellenleiter **37.7** zugeführt werden, gelangen in einen ersten 3dB-Koppler **37.4,** von dort zu gleichen Anteilen in Verbindungswellenleiter **37.6** und passieren die Filterplatte **35.** Auf ihrem Weg über die Verbindungswellenleiter **37.5** werden sie im zweiten 3dB-Koppler **37.2** gebündelt (Mach-Zehnderinterferometer-Prinzip) und im Ausgangswellenleiter **37.3** dem vom Laserdioden-Schaltkreis **38** erzeugten Signal im Wellenlängen-Multiplex überlagert.

Die Filterplatten **35** der Bausteine **34.0.** gemäß Figur 4 und **37.0** gemäß Figur 6 sind jeweils individuell auf die Arbeits-Wellenlänge des Photodioden-Schaltkreises **36** bzw. des Laserdioden-Schaltkreises **38** abgestimmt und lassen sich einstückig ausbilden. Beide Bausteine **34.0** und **37.0** bilden Teile einer Einheit bzw. die erste und die letzte Stufe einer Kaskade. Zwischenstufen der Kaskade, jeweils auf bestimmte zu selektierende Wellenlängen dimensioniert, werden im folgenden beschrieben.

Eine Kombination eines PLC-Empfängerbausteins **34.0** gemäß Figur 4 und eines PLC-Senderbaustein **37.0** gemäß Figur 6 führt zu einem sogenannten unidirektionalen Transceiver. Die **Figur 5** zeigt hierfür einen PLC-Empfänger-/Senderbaustein **39.0.** Hierbei sind ein Eingangswellenleiter **39.1,** ein erster 3dB-Koppler **39.2,** zwei Zuleitungswellenleiter **39.3,** davon einer zum Photodioden-Schaltkreis **36** und der andere zum Laserdioden-Schaltkreis **38,** ein zweiter 3dB-Koppler **39.4,** Verbindungswellenleiter **39.5** und **39.6** sowie ein Ausgangswellenleiter **39.7** vorgesehen. Die Arbeitsweisen der Empfängerseite und der Senderseite gehen jeweils aus den vorstehenden Erläuterungen zu Figur 4 und Figur 6 hervor.

Im Hinblick auf möglichst geringes optisches Überkoppeln sollten innerhalb eines Empfänger-/Senderbausteins gemäß Figur 5 die Arbeitswellenlängen der detektierenden Photodioden und der emittierenden Laserdioden unterschiedlich sein. Damit ergibt sich für den PLC-Empfänger-/Senderbaustein **39.0,** daß dort entweder zwei Filterplatten **35** für jeweils eine der beiden Arbeits-Wellenlängen oder - bei eng benachbarten Arbeitswellenlängen von Photodiode und Laserdiode - etwa die doppelte Bandbreite für die beiden zu selektierenden Wellenlängen vorgesehen sein sollte.

Die in den Figuren 4, 5 und 6 dargestellten Bausteine **34.0, 37.0** und **39.0** enthalten jeweils- zwei in Reihe geschaltete passive Grundzellen planar- x optischer Wellenleiternetzwerke mit jeweils einem 3dB-Koppler mit jeweils zwei Zweigen auf der einen und zwei Zweigen auf der gegenüberliegenden Seite. Außerdem enthalten diese Bausteine mindestens eine optoelektronische Grundzelle. In einem PLC-Empfängerbaustein **34.0** ist diese Grundzelle ein Photodioden-Schaltkreis **36** und in einem PLC-Senderbaustein **37.0** ein Laserdioden-Schaltkreis **38,** ein PLC-Empfänger-/Senderbaustein **39.0** weist sowohl einen Photodioden-Schaltkreis **36** als auch einen Laserdioden-Schaltkreis **38** auf. Grundzellen planar-optischer Wellenleiternetzwerke können in Silica-on-Silicon-Technologie und Grundzellen planar-optoelektronischer Laserdioden- und Photodioden-Schaltkreise in InP-Technologie ausgebildet und auf einer gemeinsamen Trägerplatte angeordnet sein.

Die **Figuren 7 und 8** zeigen einen bidirektionalen Empfänger-/Senderbaustein (Transceiver) **40.0** in hybrider Aufbautechnik. Dieser arbeitet für Senden und Empfangen auf ausgewählten unterschiedlichen Wellenlängen. Die Signale werden in beiden Richtungen über eine gemeinsame Glasfaser **41** übertragen. Die Glasfaser **41** ist zusammen mit dem bidirektionalen Empfänger-/Senderbaustein **40.0** auf einer Trägerplatte **43** montiert. Hinsichtlich komlementärer Transceiver sowie zusätzlicher Übertragung von Verteildiensten, Signalisierkanälen oder dgl. wird auf die betreffenden vorstehenden Erläuterungen verwiesen.

Empfangene Signale werden in einem mit einem Modentransformator **40.6** zur optischen Feldaufweitung ausgebildeten Eingangs-/Ausgangswellenleiter **40.5** geführt, gelangen zu einem 3dB-Koppler **40.3** und von dort aus zu gleichen Anteilen in zwei parallel verlaufende Verbindungswellenleiter **40.4.** Dort befindet sich die Filterplatte **35,** die dieses Signal zu einem Photodioden-Schaltkreis **42** gelangen läßt. Ein zu sendendes optisches Signal wird in einem Laserdioden-Schaltkreis **44** erzeugt und über einen Zuleitungswellenleiter **40.2** in den 3dB-Koppler **40.3** geleitet. Dort wird dieses Signal zu gleichen Anteilen in die Verbindungswellenleiter **40.4** geführt. Die Filterplatte **35** selektiert, d.h. reflektiert diese Wellenlänge, so daß das reflektierte Lasersignal wieder in den 3 dB-Koppler **40.3** gelangt, der beide Anteile des Lasersignals überlagert. Das Ausgangssignal läuft über den Eingangs-/Ausgangswellenleiter **40.5** und den Modentransformator **40.6** in die Glasfaser **41.**

Konstruktive Einzelheiten und Maßnahmen zur Halterung und Fixierung von Filterplatten **35,** die für sämtliche hybrid aufgebaute Ausführungsformen der Erfindung gelten, sind deutlich in **Figur 8** zu entnehmen. In einen Schlitz, der in die Trägerplatte **43** eingesägt ist und die zugleich die planaren Wellenleiter **40.2, 40.4, 40.5** und **40.6** sowie den Koppler **40.3** enthält, Chipträger für den Photodioden- und den Laserdioden-Schaltkreis **42** bzw. **44** ist und die Glasfaser **41** in einer V-Nut aufnimmt,, läßt sich die Filterplatte **35** haltern und fixieren. Der Sägeschlitz ist mit optischer Qualität an seinen Schnittflächen zu den planaren Wellenleitern **34.5, 34.6, 37.5, 37.6, 39.5, 39,6** und **40.4** ausgeführt. Ein Kleber sollte nahezu den gleichen Brechungsindex wie das Material des planar-optischen Wellenleiterschaltkreises und wie die Filterplatte **35** aufweisen. Damit lassen sich störende Reflexionen und Streuungen weitgehend vermeiden

Ähnliche konstruktive Gesichtspunkte gelten für die Befestigung der Photodioden-Schaltkreise **36** und **42.** Diese werden in Stoßkopplung entweder senkrecht in einen weiteren gesägten Schlitz eingebracht oder bei Verwendung mit integriertem planaren Wellenleiter in der Ebene eines Zuleitungswellenleiters **34.3, 37.1** und **39.3** oder der Verbindungswellenleiter **40.4** befestigt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

## Patentansprüche

1. Optoelektronische Schaltung für gleichzeitigen bidirektionalen Sende- und Empfangsbetrieb im Wellenlängen-Multiplex-Verfahren in einem Aufbau, in dem die relative Lage aktiver Schaltungskomponenten (5, 6', 6") deren Funktionsweise bestimmt und der als einstufige, integrierte Schaltung ausgeführt ist, mit:
• einer Lichtwellenleiteranordnung, die einen optischen Koppler (11) mit einander gegenüberliegenden Anschlußseiten und vier Wellenleiterzweige (1, 2, 3, 4) aufweist, die paarweise (1, 2; 3, 4) an jeder Anschlußseite in den Koppler (11) münden und innerhalb des Kopplers (11) miteinander in Wechselwirkung stehen, und
• einem Lichtsignaldetektor (6', 6") und einer Lichtsignalquelle (5), die auf gegenüberliegenden Anschlußseiten des Kopplers (11) angeordnet, auf unterschiedliche diskrete Wellenlängen (λ_{S}, λ_{E}) für den Sende- und Empfangsbetrieb ausgelegt und mittels wellenlängenselektiver Gitterreflektoren (8, 10', 10") an den sie verbindenden Wellenleiterzweigen (2, 3, 4) optisch voneinander entkoppelt sind.

2. Optoelektronische Schaltung für gleichzeitigen bidirektionalen Sende- und Empfangsbetrieb im Wellenlängen-Multiplex-Verfahren in einem Aufbau, in dem die relative Lage aktiver Schaltungskomponenten (42, 44) deren Funktionsweise bestimmt und der als einstufige, hybrid aufgebaute Schaltung ausgeführt ist, mit:
• einer Lichtwellenleiteranordnung, die einen optischen Koppler (40.3) mit einander gegenüberliegenden Anschlußseiten und vier Wellenleiterzweige (40.2, 40.5, 2x40.4) aufweist, die paarweise an jeder Anschlußseite in den Koppler (40.3) münden und innerhalb des Kopplers (40.3) miteinander in Wechselwirkung stehen, und
• einem Lichtsignaldetektor (42) und einer Lichtsignalquelle (44), die auf gegenüberliegenden Anschlußseiten des Kopplers (40.3) angeordnet, auf unterschiedliche diskrete Wellenlängen für den Sende- und Empfangsbetrieb ausgelegt und mittels einer wellenlängenselektiv reflektierenden, in dem zum Lichtsignaldetektor (42) führenden Wellenleiterzweig (40.4) angeordneten dielektrischen Filterplatte (35) optisch voneinander entkoppelt sind.

3. Optoelektronische Schaltung für gleichzeitigen unidirektionalen Sende- und Empfangsbetrieb im Wellenlängen-Multiplex-Verfahren in einem Aufbau, in dem die relative Lage aktiver Schaltungskomponenten (17.2, 21.1; 17.3; 21.2) deren Funktionsweise bestimmt und der als einstufige, integrierte Schaltung ausgeführt ist, mit:
• einer Lichtwellenleiteranordnung, die zwei in Reihe geschaltete optische Koppler (22.2, 23.2 bzw. 22.3, 23.3) mit in der Reihenschaltung einander zugewandten sowie einander gegenüberliegenden Anschlußseiten und sechs Wellenleiterzweige (19.1, 19.3, 19.2, 19.4, 19.5, 19.6 bzw. 20.1, 20.3, 20.2, 20.4, 20.5, 20.6) aufweist, die paarweise (19.1, 19.3; 19.2, 19.4; 19.5, 19.6 bzw. 20.1, 20.3; 20.2, 20.4; 20.5, 20.6) an jeder Anschlußseite in die Koppler (22.2, 23.2 bzw. 22.3, 23.3) münden und innerhalb der Koppler (22.2, 23.2 bzw. 22.3, 23.3) miteinander in Wechselwirkung stehen, und
• einem Lichtsignaldetektor (17.2 bzw. 17.3) und einer Lichtsignalquelle (21.1 bzw. 21.2), die auf gegenüberliegenden Anschlußseiten der in Reihe geschalteten Koppler (22.2, 23.2 bzw. 22.3, 23.3) angeordnet, auf unterschiedliche diskrete Wellenlängen (λ_{S1} bzw. λ_{S2} und λ_{E2} bzw. λ_{E3}) für den Sende- und Empfangsbetrieb ausgelegt und mittels wellenlängenselektiver Gitterreflektoren (33.1, 26.1, 26.2, 28.1, 27.1, 27.2, 28.2 bzw. 33.2, 29.1, 29.2, 31.1, 30.1, 30.2, 31.2) an den die Koppler (22.2, 23.2 bzw. 22.3, 23.3) der Reihenschaltung verbindenden Wellenleiterzweigen (19.2, 19.4 bzw. 20.2, 20.4) und/oder an dem den Lichtsignaldetektor (17.2 bzw. 17.3) mit der Reihenschaltung der Koppler (22.2, 23.2 bzw. 22.3, 23.3) verbindenden Wellenleiterzweig (19.3 bzw. 20.3) optisch voneinander entkoppelt sind.

4. Optoelektronische Schaltung für gleichzeitigen unidirektionalen Sende- und Empfangsbetrieb im Wellenlängen-Multiplex-Verfahren in einem Aufbau, in dem die relative Lage aktiver Schaltungskomponenten (36, 38) deren Funktionsweise bestimmt und der als einstufige, hybrid aufgebaute Schaltung ausgeführt ist, mit:
• einer Lichtwellenleiteranordnung, die zwei in Reihe geschaltete optische Koppler (39.2, 39.4) mit in der Reihenschaltung einander zugewandten sowie einander gegenüberliegenden Anschlußseiten und sechs Wellenleiterzweige (39.1, 39.3, 2x(39.5 + 39.6), 39.3, 39.7) aufweist, die paarweise (39.1, 39.3; 2x(39.5 + 39.6); 39.3, 39.7) an jeder Anschlußseite in die Koppler (39.2, 39.4) münden und innerhalb der Koppler (39.2, 39.4) miteinander in Wechselwirkung stehen, und
• einem Lichtsignaldetektor (36) und einer Lichtsignalquelle (38), die auf gegenüberliegenden Anschlußseiten der in Reihe geschalteten Koppler (39.2, 39.4) angeordnet, auf unterschiedliche diskrete Wellenlängen für den Sende- und Empfangsbetrieb ausgelegt und mittels wellenlängenselektiv reflektierender, zwischen den die Reihenschaltung der Koppler (39.2, 39.4) verbindenden Wellenleiterzweigen (2x(39.5 + 39.6)) angeordneter dielektrischer Filterplatten (35) optisch voneinander entkoppelt sind.

5. Optoelektronische Schaltung für gleichzeitigen unidirektionalen Sende- und Empfangsbetrieb im Wellenlängen-Multiplex-Verfahren in einem Aufbau, in dem die relative Lage aktiver Schaltungskomponenten (17.1, 17.2, 17.3, 21.1, 21.2) deren Funktionsweise bestimmt und der als mehrstufige, integrierte Schaltung ausgeführt ist, mit:
• einer Lichtwellenleiteranordnung, die in jeder Stufe (32.1 bzw. 32.2 bzw. 32.3) zwei in Reihe geschaltete optische Koppler (22.1, 23.1; 22.2, 23.2; 22.3, 23.3) mit in der Reihenschaltung einander zugewandten sowie einander gegenüberliegenden Anschlußseiten und sechs Wellenleiterzweige (18.1, 18.3, 18.2, 18.4, 18.5, 18.6 bzw. 19.1, 19.3, 19.2, 19.4, 19.5, 19.6 bzw. 20.1, 20.3, 20.2, 20.4, 20.5, 20.6) aufweist, die paarweise (18.1, 18.3; 18.2, 18.4; 18.5, 18.6 bzw. 19.1, 19.3; 19.2, 19.4; 19.5, 19.6 bzw. 20.1, 20.3; 20.2, 20.4; 20.5, 20.6) an jeder Anschlußseite in die Koppler (22.1, 23.1; 22.2, 23.2; 22.3, 23.3) münden und innerhalb der Koppler (22.1, 23.1; 22.2, 23.2; 22.3, 23.3) miteinander in Wechselwirkung stehen, und
• einem Lichtsignaldetektor (17.1) in der ersten Stufe (32.1) und einer Lichtsignalquelle (21....) in der letzten Stufe (32....) und einem Lichtsignaldetektor (17.2, 17.3,....) und einer Lichtsignalquelle (21.1, 21.2,....) in jeder Zwischenstufe (32.2 bzw.32.3), die in den Zwischenstufen (32.2 bzw.32.3) und in der ersten Stufe (32.1) bezüglich des Lichtsignaldetektors (17.1) und in der letzten Stufe (32....) bezüglich der Lichtsignalquelle (21....) analog zu einer Zwischenstufe (32.2 bzw.32.3) auf gegenüberliegenden Anschlußseiten der in Reihe geschalteten Koppler (22.1, 23.1; 22.2, 23.2; 22.3, 23.3) angeordnet, auf unterschiedliche diskrete Wellenlängen (λ_{S1}, λ_{S2}. λ_{S...;} λ_{E1}, λ_{E2,} λ_{E3}, λ_{E...}) für den Sende- und Empfangsbetrieb ausgelegt und in jeder Stufe (32.1, 32.2, 32.3, 32....) mittels wellenlängenselektiver Gitterreflektoren (24.1, 24.2, 25.1, 25.2 bzw. 33.1, 26.1, 26.2, 28.1, 27.1, 27.2, 28.2 bzw. 33.2, 29.1, 29.2, 31.1, 30.1, 30.2, 31.2) an den die Koppler (22.1, 23.1; 22.2, 23.2; 22.3, 23.3) der Reihenschaltung verbindenden Wellenleiterzweigen (18.2, 18.4 bzw. 19.2, 19.4 bzw. 20.2, 20.4) und/oder an dem den Lichtsignaldetektor (17.2, 17.3) mit der Reihenschaltung der Koppler (22.2, 23.2; 22.3, 23.3) verbindenden Wellenleiterzweig (19.3, 20.3) optisch voneinander entkoppelt sind.

6. Optoelektronische Schaltung für gleichzeitigen unidirektionalen Sende- und Empfangsbetrieb im Wellenlängen-Multiplex-Verfahren in einem Aufbau, der die relative Lage einzelner Schaltungskomponenten (36, 38) zueinander bestimmt und als mehrstufige, hybrid aufgebaute Schaltung ausgeführt ist, mit:
• einer Lichtwellenleiteranordnung, die in jeder Stufe zwei in Reihe geschaltete optische Koppler (34.2, 34.4; 39.2, 39.4; 37.4, 37.2) mit in der Reihenschaltung einander zugewandten sowie einander gegenüberliegenden Anschlußseiten und sechs Wellenleiterzweige (34.1, 34.3, 2x(34.5+34.6), 34.7, ohne bzw. 39.1, 39.3, 2x(39.5+39.6), 39.3, 39.7 bzw. ohne, 37.7, 2x(37.6+37.5), ohne, 37.3) aufweist, die paarweise (34.1, 34.3; 2x(34.5+34.6); 34.7, ohne bzw. 39.1, 39.3; 2x(39.5+39.6); 39.3, 39.7 bzw. ohne, 37.7; 2x(37.6+37.5); ohne, 37.3) an jeder Anschlußseite in die Koppler (34.2, 34.4; 39.2, 39.4; 37.4, 37.2) münden und innerhalb der Koppler (34.2, 34.4; 39.2, 39.4; 37.4, 37.2) miteinander in Wechselwirkung stehen, und
• einem Lichtsignaldetektor (36) in der ersten Stufe und einer Lichtsignalquelle (38) in der letzten Stufe und einem Lichtsignaldetektor (36) und einer Lichtsignalquelle (38) in jeder Zwischenstufe, die in den Zwischenstufen und in der ersten Stufe bezüglich des Lichtsignaldetektors (36) und in der letzten Stufe bezüglich der Lichtsignalquelle (38) analog zu einer Zwischenstufe auf gegenüberliegenden Anschlußseiten der in Reihe geschalteten Koppler (34.2, 34.4; 39.2, 39.4; 37.4, 37.2) angeordnet, auf unterschiedliche diskrete Wellenlängen für den Sende- und Empfangsbetrieb ausgelegt und in jeder Stufe mittels wellenlängenselektiv reflektierender, in den die Reihenschaltung der Koppler (34.2, 34.4; 39.2, 39.4; 37.4, 37.2) verbindenden Wellenleiterzweigen (34.5, 34.6 bzw. 39.5, 39.6 bzw. 37.6 37.5) angeordneter dielektrischer Filterplatten (35) optisch voneinander entkoppelt sind.

7. Schaltung nach einem der Ansprüche 1 bis 6, bei der
der Koppler (11; 22.1, 22.2, 22.3, 23.1, 23.2, 23.3; 34.2, 34.4; 37.2, 37.4; 39.2, 39.4; 40.3) ein Multi-Mode-Interference-Koppler ist.

8. Schaltung nach einem der Ansprüche 1 bis 7, bei der
in einem Lichtwellenleiter-Zweig (2; 40.2) zwischen Lichtsignalquelle (5; 44) und Koppler (11; 40.3) ein weiterer, im wesentlichen nur Licht einer Wellenlänge für Empfangsbetrieb (λ_{E}) reflektierender wellenlängenselektiver Reflektor (8) angeordnet ist.

9. Schaltung nach einem der Ansprüche 1, 3, 5 oder Schaltung nach Anspruch 7 oder 8, bei der
in Lichtwellenleiter-Zweigen (3, 4) zwischen Lichtsignaldetektoren (6', 6") und Koppler (11) jeweils ein Stoppbandfilter (10', 10") angeordnet ist, dessen Sperrwellenlänge im wesentlichen gleich der Wellenlänge für Sendebetrieb (λ_{S}) ist.

10. Schaltung nach einem der Ansprüche 1, 3, 5 oder Schaltung nach Anspruch 7, 8 oder 9, bei der
die Wellenlänge für Sendebetrieb (λ_{S}) größer ist als die Wellenlänge für Empfangsbetrieb (λ_{E}) und der Querschnitt der Lichtwellenleiter-Zweige (3, 4) zwischen Lichtsignaldetektoren (6',6") und Koppler (11) im Bereich zwischen den Stoppbandfiltern (10', 10") und dem Lichtsignaldetektor (6', 6") zur Verringerung des optischen Übersprechens so gering ist, daß die sogenannte "Cut-Off-Wellenlänge" unterhalb der Wellenlänge für Sendebetrieb (λ_{S}) liegt.

11. Schaltung nach einem der Ansprüche 1, 3, 5 oder Schaltung nach Anspruch 7, 8 oder 9, bei der
die Wellenlänge für Sendebtrieb (λ_{S}) kleiner ist als die Wellenlänge für Empfangsbetrieb (λ_{E}) und die Lichtwellenleiter-Zweige (3,4) zwischen Lichtsignaldetektoren (6',6") und Koppler (11) im Bereich zwischen den Stoppbandfiltern (10', 10") und dem Lichtsignaldetektor (6', 6") jeweils mit einem Absorptionselement (9.3, 9.4, 9.5) versehen sind, das aus einer Schicht quaternären Halbleitermaterials besteht, dessen Bandlücke einer Wellenlänge entspricht, die zwischen der Wellenlänge für Sendebtrieb (λ_{S}) und der Wellenlänge für Empfangsbetrieb (λ_{E}) liegt.

12. Schaltung nach einem der Ansprüche 1, 3, 5 oder Schaltung nach Anspruch 7, 8 oder 9, bei der
eine Mach-Zehnder-Anordnung zusammengesetzt ist aus einer Wellenleiteranordnung mit einem ersten 3-dB-Koppler (22.2 bzw. 22.3) mit vier Lichtwellenleiter-Zweigen (19.1, 19.2, 19.3, 19.4 bzw. 20.1, 20.2, 20.3, 20.4) und einem zweiten 3-dB-Koppler (23.2 bzw. 23.3) mit vier Lichtwellenleiter-Zweigen (19.2, 19.4, 19.5, 19.6 bzw. 20.2, 20.4, 20.5, 20.6), wobei ein fünfter Lichtwellenleiter-Zweig (19.5 bzw. 20.5) mit der Lichtsignalquelle (21.1 bzw. 21.2) und ein zweiter Lichtwellenleiter-Zweig (19.3 bzw. 20.3) mit dem Lichtsignaldetektor (17.2 bzw. 17.3) verbunden ist, so daß die beiden inneren Lichtwellenleiter-Zweige (19.2, 19.4 bzw. 20.2, 20.4) den beiden Kopplern (22.2, 23.2 bzw. 22.3, 23.3) gemeinsam sind, und daß in diesen inneren Lichtwellenleiter-Zweigen (19.2, 19.4 bzw. 20.2, 20.4) jeweils ein im wesentlichen nur Licht der Wellenlänge für Sendebtrieb (λ_{S1} bzw. λ_{S2}) reflektierender wellenlängenselektiver Reflektor (28.1, 28.2 bzw. 31.1, 31.2) angeordnet ist.

13. Schaltung nach Anspruch 12, bei der
die Wellenlänge für Sendebetrieb (λ_{S1} bzw. λ_{S2}) und die Wellenlänge für Empfangsbetrieb (λ_{E1} bzw. λ_{E2}) unterschiedlich sind und daß in den inneren Lichtwellenleiter-Zweigen (19.2, 19.4 bzw. 20.2, 20.4) wellenlängenselektive Reflektoren (26.1, 26.2, 27.1, 27.2 bzw. 29.1, 29.2, 30.1, 30.2) für die jeweilige Wellenlänge für Empfangsbetrieb (λ_{E2} bzw. λ_{E2}) und TE- und TM-Polarisationen sowie wellenlängenselektive Reflektoren (28.1, 28.2 bzw. 31.1, 31.2) für die jeweilige Wellenlänge für Sendebetrieb (λ_{S1} bzw. λ_{S2}) und TE-Polarisation angeordnet sind.

14. Schaltung nach Anspruch 13, bei der
im zweiten und dritten Lichtwellenleiter-Zweig (19.3 bzw. 20.3) ein wellenlängenselektiver Reflektor (33.1 bzw. 33.2) für die jeweilige Wellenlänge für Sendebetrieb (λ_{S1} bzw. λ_{S2}) und TE-Polarisation angeordnet ist.

15. Schaltung nach einem der Ansprüche 12 bis 14, bei der
mindestens zwei Mach-Zehnder-Anordnungen als Stufen kaskadiert sind, wobei jeweils ein sechster Lichtwellenleiter-Zweig (18.6, 19.6) der vorausgehenden Stufe mit einem ersten Lichtwellenleiter-Zweig (19.1, 20.1) der nachfolgenden Stufe verbunden ist, und daß sich die Wellenlängen für Sendebetrieb (λ_{S}) und die Wellenlängen für Empfangsbetrieb (λ_{E}) je Stufe unterscheiden.

16. Schaltung nach einem der Ansprüche 1 bis 15, bei der
der Lichtsignaldetektor eine Photodiode (6', 6", 17.1, 17.2, 17.3) ist.

17. Schaltung nach Anspruch 16, bei der
die Photodiode (6', 6", 17.1, 17.2, 17.3 bzw. 36, 42) zur Verringerung des Übersprechens von der Lichtsignalquelle (5, 21.1, 21.2 bzw. 38, 44) eine Halbleiterverbindung aufweist, die im wesentlichen transparent für Licht der Wellenlänge für Sendebetrieb (λ_{S}) und absorbierend für Licht der Wellenlänge für Empfangsbetrieb (λ_{E}) ist.

18. Schaltung nach einem der Ansprüche 1 bis 15, bei der
der Lichtsignaldetektor (6', 6", 17.1, 17.2, 17.3 bzw. 36, 42) in eine erste Sektion aus quaternärem Material und eine damit in Reihe liegende zweite Sektion aus ternärem Material gegliedert ist.

19. Schaltung nach einem der Ansprüche 1 bis 18, bei der
die Lichtsignaldetektoren (6', 6") und/oder die Lichtsignalquelle (5) benachbart angeordnete Absorber (9.1, 9.2, 9.3, 9.4, 9.5) jeweils für Licht der Wellenlänge für Sendebtrieb (λ_{S}) bzw. der Wellenlänge für Empfangsbetrieb (λ_{E}) aufweisen.

20. Schaltung nach einem der Ansprüche 1, 3, 5 oder Schaltung nach einem der Ansprüche 7 bis 19, bei der
die Lichtsignalquelle (5; 21.1, 21.2) und/oder die wellenlängenselektiven Reflektoren (8, 10', 10", 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) in ihrer unmittelbaren Nähe mit Heizelementen versehen sind.

21. Schaltung nach einem der Ansprüche 1, 3, 5 oder Schaltung nach einem der Ansprüche 7 bis 20, bei der
die wellenlängenselektiven Reflektoren (8, 10', 10", 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) Gitter-Reflektoren sind, insbesondere Bragg-Reflektoren.

22. Schaltung nach einem der Ansprüche 1 bis 21, bei der
ein zu einer Schnittstelle (7) zum Anschluß eines externen Lichtleiters führender Lichtwellenleiter-Zweig (1) unmittelbar vor der Schnittstelle (7) als Modentransformator (12) ausgebildet ist.

23. Schaltung nach einem der Ansprüche 1 bis 22, bei der
die Lichtsignalquelle (5, 21.1, 21.2 bzw. 38, 44) eine einmodige Laserdiode ist.

24. Schaltung nach einem der Ansprüche 2, 4 oder 6, bei der
Grundzellen planar-optischer Wellenleiternetzwerke in Silica-on-Silicon-Technologie und Grundzellen planar-optoelektronischer Laser- und Photodioden-Schaltkreise (38, 44 bzw. 36, 42) in InP-Technologie aufgebaut und auf einer Trägerplatte (43) angeordnet sind.

25. Schaltung nach einem der Ansprüche 2, 4 oder 6 oder 24, bei der
die zwei Lichtwellenleiter-Zweigen (34.5, 34.6; 37.5, 37.6; 39.5, 39.6; 40.4) der Lichtwellenleiteranordnung zugeordneten wellenlängenselektiven Reflektoren als einstückige dielektrische Filterplatte (35) ausgebildet sind.

26. Schaltung nach Anspruch 25, bei der
die Trägerplatte (43) mit einem die Filterplatte (35) halternden Sägeschlitz versehen ist und zugleich die planaren Wellenleiter (40.2, 40.3, 40.4, 40.5, 40.6) enthält, Chipträger für den Photodioden- und den Laserdioden-Schaltkreis (42, 44) ist und die Glasfaser (41) in einer V-Nut aufnimmt.

27. Schaltung nach Anspruch 24, bei der
eine Mach-Zehnder-Anordnung zusammengesetzt ist aus mindestens drei Grundzellen, nämlich zwei in Reihe geschalteten passiven Grundzellen planar-optischer Wellenleiternetzwerke mit dazwischen angeordneter Filterplatte (35) und mindestens einer optoelektronischen Grundzelle, nämlich einem Laserdioden-Schaltkreis (38, 44) oder einem Photodioden-Schaltkreis (36,42).

28. Schaltung nach Anspruch 27, bei der
in kaskadierten Stufen die erste Stufe einen Photodioden-Schaltkreis (36), die letzte Stufe einen Laserdioden-Schaltkreis (38) und alle dazwischenliegenden Stufen jeweils sowohl einen Photodioden-Schaltkreis (36) als auch einen Laserdioden-Schaltkreis (38) aufweisen.

## Claims

1. An optoelectronic circuit for simultaneous bidirectional transmit and receive operation using the wavelength-division multiplex process in a structure in which the relative location of active circuit components (5, 6', 6' ') determines the mode of operation thereof and which is constructed as a single-stage integrated circuit, with:
• an optical-waveguide arrangement which comprises an optical coupler (11) with connecting sides located opposite one another and four waveguide branches (1, 2, 3, 4) which lead into the coupler (11) in pairs (1, 2; 3, 4) on each connecting side and interact with one another within the coupler (11), and
• a light-signal detector (6', 6' ') and a light-signal source (5) which are arranged on opposite connecting sides of the coupler (11), are designed for different discrete wavelengths (λ_{S}, λ_{E}) for transmit and receive operation and are optically decoupled from one another by means of wavelength-selective grating reflectors (8, 10', 10' ') on the waveguide branches (2, 3, 4) connecting them.

2. An optoelectronic circuit for simultaneous bidirectional transmit and receive operation using the wavelength-division multiplex process in a structure in which the relative location of active circuit components (42, 44) determines the mode of operation thereof and which is constructed as a single-stage hybrid circuit, with:
• an optical-waveguide arrangement which comprises an optical coupler (40.3) with connecting sides located opposite one another and four waveguide branches (40.2, 40.5, 2x40.4) which lead into the coupler (40.3) in pairs on each connecting side and interact with one another within the coupler (40.3), and
• a light-signal detector (42) and a light-signal source (44) which are arranged on opposite connecting sides of the coupler (40.3), are designed for different discrete wavelengths for transmit and receive operation and are optically decoupled from one another by means of a wavelength-selectively reflecting dielectric filter plate (35) arranged in the waveguide branch (40.4) leading to the light-signal detector (42).

3. An optoelectronic circuit for simultaneous unidirectional transmit and receive operation using the wavelength-division multiplex process in a structure in which the relative location of active circuit components (17.2, 21.1; 17.3; 21.2) determines the mode of operation thereof and which is constructed as a single-stage integrated circuit, with:
• an optical-waveguide arrangement which comprises two series-connected optical couplers (22.2, 23.2 and 22.3, 23.3) with connecting sides facing one another in the series connection and also located opposite one another and six waveguide branches (19.1, 19.3, 19.2, 19.4, 19.5, 19.6 and 20.1, 20.3, 20.2, 20.4, 20.5, 20.6) which lead into the couplers (22.2, 23.2 and 22.3, 23.3) in pairs (19.1, 19.3; 19.2, 19.4; 19.5, 19.6 and 20.1, 20.3; 20.2, 20.4; 20.5, 20.6) on each connecting side and interact with one another within the couplers (22.2, 23.2 and 22.3, 23.3), and
• a light-signal detector (17.2 and 17.3) and a light-signal source (21.1 and 21.2) which are arranged on opposite connecting sides of the series-connected couplers (22.2, 23.2 and 22.3, 23.3), are designed for different discrete wavelengths (λ_{S1} and λ_{S2}, respectively, and λ_{E2} and λ_{E3}, respectively) for transmit and receive operation and are optically decoupled from one another by means of wavelength-selective grating reflectors (33.1, 26.1, 26.2, 28.1, 27.1, 27.2, 28.2 and 33.2, 29.1, 29.2, 31.1, 30.1, 30.2, 31.2) on the waveguide branches (19.2, 19.4 and 20.2, 20.4) connecting the couplers (22.2, 23.2 and 22.3, 23.3) of the series connection and/or on the waveguide branch (19.3 and 20.3) connecting the light-signal detector (17.2 and 17.3) to the series connection of the couplers (22.2, 23.2 and 22.3, 23.3).

4. An optoelectronic circuit for simultaneous unidirectional transmit and receive operation using the wavelength-division multiplex process in a structure in which the relative location of active circuit components (36, 38) determines the mode of operation thereof and which is constructed as a single-stage hybrid circuit, with:
• an optical-waveguide arrangement which comprises two series-connected optical couplers (39.2, 39.4) with connecting sides facing one another in the series connection and also located opposite one another and six waveguide branches (39.1, 39.3, 2x(39.5 + 39.6), 39.3, 39.7) which lead into the couplers (39.2, 39.4) in pairs (39.1, 39.3; 2x(39.5 + 39.6); 39.3, 39.7) on each connecting side and interact with one another within the couplers (39.2, 39.4), and
• a light-signal detector (36) and a light-signal source (38) which are arranged on opposite connecting sides of the series-connected couplers (39.2, 39.4), are designed for different discrete wavelengths for transmit and receive operation and are optically decoupled from one another by means of wavelength-selectively reflecting dielectric filter plates (35) arranged between the waveguide branches (2x(39.5 + 39.6)) connecting the series connection of the couplers (39.2, 39.4).

5. An optoelectronic circuit for simultaneous unidirectional transmit and receive operation using the wavelength-division multiplex process in a structure in which the relative location of active circuit components (17.1, 17.2, 17.3, 21.1, 21.2) determines the mode of operation thereof and which is constructed as a multi-stage integrated circuit, with:
• an optical-waveguide arrangement which comprises in each stage (32.1 and 32.2 and 32.3) two series-connected optical couplers (22.1, 23.1; 22.2, 23.2; 22.3, 23.3) with connecting sides facing one another in the series connection and also located opposite one another and six waveguide branches (18.1, 18.3, 18.2, 18.4, 18.5, 18.6 and 19.1, 19.3, 19.2, 19.4, 19.5, 19.6 and 20.1, 20.3, 20.2, 20.4, 20.5, 20.6) which lead into the couplers (22.1, 23.1; 22.2, 23.2; 22.3, 23.3) in pairs (18.1, 18.3; 18.2, 18.4; 18.5, 18.6 and 19.1, 19.3; 19.2, 19.4; 19.5, 19.6 and 20.1, 20.3; 20.2, 20.4; 20.5, 20.6) on each connecting side and interact with one another within the couplers (22.1, 23.1; 22.2, 23.2; 22.3, 23.3), and
• a light-signal detector (17.1) in the first stage (32.1) and a light-signal source (21...) in the last stage (32...) and a light-signal detector (17.2, 17.3, ...) and a light-signal source (21.1, 21.2, ...) in each intermediate stage (32.2 and 32.3) which are arranged in the intermediate stages (32.2 and 32.3) and in the first stage (32.1) with respect to the light-signal detector (17.1) and in the last stage (32...) with respect to the light-signal source (21...) in a manner analogous to an intermediate stage (32.2 and 32.3) on opposite connecting sides of the series-connected couplers (22.1, 23.1; 22.2, 23.2; 22.3, 23.3), are designed for different discrete wavelengths (λ_{S1}, λ_{S2}, λ_{S...}; λ_{E1}, λ_{E2}, λ_{E3}, λ_{E...}) for transmit and receive operation and are optically decoupled from one another in each stage (32.1, 32.2, 32.3, 32...) by means of wavelength-selective grating reflectors (24.1, 24.2, 25.1, 25.2 and 33.1, 26.1, 26.2, 28.1, 27.1, 27.2, 28.2 and 33.2, 29.1, 31.1, 30.1, 30.2, 31.2) on the waveguide branches (18.2, 18.4 and 19.2, 19.4 and 20.2, 20.4) connecting the couplers (22.1, 23.1; 22.2, 23.2; 22.3, 23.3) of the series connection and/or on the waveguide branch (19.3, 20.3) connecting the light-signal detector (17.2, 17.3) to the series connection of the couplers (22.2, 23.2; 22.3, 23.3).

6. An optoelectronic circuit for simultaneous unidirectional transmit and receive operation using the wavelength-division multiplex process in a structure which determines the relative location of individual circuit components (36, 38) with respect to one another and is constructed as a multi-stage hybrid circuit, with:
• an optical-waveguide arrangement which comprises in each stage two series-connected optical couplers (34.2, 34.4; 39.2, 39.4; 37.4, 37.2) with connecting sides facing one another in the series connection and also located opposite one another and six waveguide branches (34.1, 34.3, 2x(34.5+34.6), 34.7, without and 39.1, 39.3, 2x(39.5+39.6), 39.3, 39.7 and without, 37.7, 2x(37.6+37.5), without, 37.3) which lead into the couplers (34.2, 34.4; 39.2, 39.4; 37.4, 37.2) in pairs (34.1, 34.3; 2x(34.5+34.6); 34.7, without and 39.1, 39.3; 2x(39.5+39.6); 39.3, 39.7 and without, 37.7; 2x(37.6+37.5); without, 37.3) on each connecting side and interact with one another within the couplers (34.2, 34.4; 39.2, 39.4; 37.4, 37.2), and
• a light-signal detector (36) in the first stage and a light-signal source (38) in the last stage and a light-signal detector (36) and a light-signal source (38) in each intermediate stage, which are arranged in the intermediate stages and in the first stage with respect to the light-signal detector (36) and in the last stage with respect to the light-signal source (38) in a manner analogous to an intermediate stage on opposite connecting sides of the series-connected couplers (34.2, 34.4; 39.2, 39.4; 37.4, 37.2), are designed for different discrete wavelengths for transmit and receive operation and are optically decoupled from one another in each stage by means of wavelength-selectively reflecting dielectric filter plates (35) arranged in the waveguide branches (34.5, 34.6 and 39.5, 39.6 and 37.6, 37.5) connecting the series connection of the couplers (34.2, 34.4; 39.2, 39.4; 37.4, 37.2).

7. Circuit according to one of Claims 1 to 6, wherein the coupler (11; 22.1, 22.2, 22.3, 23.1, 23.2, 23.3; 34.2, 34.4; 37.2, 37.4; 39.2, 39.4; 40.3) is a multimode interference coupler.

8. Circuit according to one of Claims 1 to 7, wherein a further wavelength-selective reflector (8), reflecting substantially only light of a wavelength for receive operation (λ_{E}) is arranged in an optical-waveguide branch (2; 40.2) between light-signal source (5; 44) and coupler (11; 40.3).

9. Circuit according to one of Claims 1, 3, 5 or circuit according to Claim 7 or 8, wherein a stopband filter (10', 10' '), the blocking wavelength of which is substantially equal to the wavelength for transmit operation (λ_{S}), is arranged in each instance in optical-waveguide branches (3, 4) between light-signal detectors (6', 6' ') and coupler (11).

10. Circuit according to one of Claims 1, 3, 5 or circuit according to Claim 7, 8 or 9, wherein the wavelength for transmit operation (λ_{S}) is greater than the wavelength for receive operation (λ_{E}) and the cross-section of the optical-waveguide branches (3, 4) between light-signal detectors (6', 6' ') and coupler (11) in the region between the stopband filters (10', 10' ') and the light-signal detector (6', 6' ') is so small with a view to diminishing the optical cross-talk that the so-called cut-off wavelength lies below the wavelength for transmit operation (λ_{S}).

11. Circuit according to one of Claims 1, 3, 5 or circuit according to Claim 7, 8 or 9, wherein the wavelength for transmit operation (λ_{S}) is smaller than the wavelength for receive operation (λ_{E}) and the optical-waveguide branches (3, 4) between light-signal detectors (6', 6' ') and coupler (11) in the region between the stopband filters (10', 10' ') and the light-signal detector (6', 6' ') are each provided with an absorption element (9.3, 9.4, 9.5) which consists of a layer of quaternary semiconductor material, the band gap of which corresponds to a wavelength that lies between the wavelength for transmit operation (λ_{S}) and the wavelength for receive operation (λ_{E}).

12. Circuit according to one of Claims 1, 3, 5 or circuit according to Claim 7, 8 or 9, wherein a Mach-Zehnder arrangement is composed of a waveguide arrangement with a first 3-dB coupler (22.2 and 22.3) with four optical-waveguide branches (19.1, 19.2, 19.3, 19.4 and 20.1, 20.2, 20.3, 20.4) and a second 3-dB coupler (23.2 and 23.3) with four optical-waveguide branches (19.2, 19.4, 19.5, 19.6 and 20.2, 20.4, 20.5, 20.6), whereby a fifth optical-waveguide branch (19.5 and 20.5) is connected to the light-signal source (21.1 and 21.2) and a second optical-wavelength branch (19.3 and 20.3) is connected to the light-signal detector (17.2 and 17.3), so that the two inner optical-waveguide branches (19.2, 19.4 and 20.2, 20.4) are common to the two couplers (22.2, 23.2 and 22.3, 23.3), and a wavelength-selective reflector (28.1, 28.2 and 31.1, 31.2) reflecting substantially only light of the wavelength for transmit operation (λ_{S1} and λ_{S2}) is arranged in each instance in these inner optical-waveguide branches (19.2, 19.4 and 20.2, 20.4).

13. Circuit according to Claim 12, wherein the wavelength for transmit operation (λ_{S1})and λ_{S2}) and the wavelength for receive operation (λ_{E1} and λ_{E2}) are different and wavelength-selective reflectors (26.1, 26.2, 27.1, 27.2 and 29.1, 29.2, 30.1, 30.2) for the respective wavelength for receive operation (λ_{E1} and λ_{E2}) and TE and TM polarisations and also wavelength-selective reflectors (28.1, 28.2 and 31.1, 31.2) for the respective wavelength for transmit operation (λ_{S1} and λ_{S2}) and TE polarisation are arranged in the inner optical-waveguide branches (19.2, 19.4 and 20.2, 20.4).

14. Circuit according to Claim 13, wherein a wavelength-selective reflector (33.1 and 33.2) for the respective wavelength for transmit operation (λ_{S1} and λ_{S2}) and TE polarisation is arranged in the second and third optical-waveguide branches (19.3 and 20.3).

15. Circuit according to one of Claims 12 to 14, wherein at least two Mach-Zehnder arrangements are cascaded in the form of stages, whereby a sixth optical-waveguide branch (18.6, 19.6) of the preceding stage is connected in each instance to a first optical-waveguide branch (19.1, 20.1) of the following stage, and the wavelengths for transmit operation (λ_{S}) and the wavelengths for receive operation (λ_{E}) differ for each stage.

16. Circuit according to one of Claims 1 to 15, wherein the light-signal detector is a photodiode (6', 6' ', 17.1, 17.2, 17.3).

17. Circuit according to Claim 16, wherein with a view to diminishing the cross-talk from the light-signal source (5, 21.1, 21.2 and 38, 44) the photodiode (6', 6' ', 17.1, 17.2, 17.3 and 36, 42) comprises a semiconductor connection which is substantially transparent in respect of light of the wavelength for transmit operation (λ_{S}) and is absorbing in respect of light of the wavelength for receive operation (λ_{E}).

18. Circuit according to one of Claims 1 to 15, wherein the light-signal detector (6', 6' ', 17.1, 17.2, 17.3 and 36, 42) is subdivided into a first section consisting of quaternary material and a second section in series with said first section and consisting of ternary material.

19. Circuit according to one of Claims 1 to 18, wherein the light-signal detectors (6', 6' ') and/or the light-signal source (5) comprise adjacently arranged absorbers (9.1, 9.2, 9.3, 9.4, 9.5) in each instance for light of the wavelength for transmit operation (λ_{S}) and for light of the wavelength for receive operation (λ_{E})

20. Circuit according to one of Claims 1, 3, 5 or circuit according to one of Claims 7 to 19, wherein the light-signal source (5; 21.1, 21.2) and/or the wavelength-selective reflectors (8, 10', 10' ', 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) are provided with heating elements in their immediate vicinity.

21. Circuit according to one of Claims 1, 3, 5 or circuit according to one of Claims 7 to 20, wherein the wavelength-selective reflectors (8, 10', 10' ', 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) are grating reflectors, in particular Bragg reflectors.

22. Circuit according to one of Claims 1 to 21, wherein an optical-waveguide branch (1) leading to an interface (7) for the connection of an external light guide takes the form of a mode transformer (12) immediately upstream of the interface (7).

23. Circuit according to one of Claims 1 to 22, wherein the light-signal source (5, 21.1, 21.2 and 38, 44) is a monomode laser diode.

24. Circuit according to one of Claims 2, 4 or 6, wherein
core cells of planar-optical waveguide networks are constructed using silica-on-silicon technology and core cells of planar-optoelectronic laser-diode circuits and photodiode circuits (38, 44 and 36, 42) are constructed using InP technology and are arranged on a backing plate (43).

25. Circuit according to one of Claims 2, 4 or 6 or 24, wherein
the two optical-waveguide branches (34.5, 34.6; 37.5, 37.6; 39.5, 39.6; 40.4) of the wavelength-selective reflectors assigned to the optical-waveguide arrangement take the form of an integral dielectric filter plate (35).

26. Circuit according to Claim 25, wherein
the backing plate (43) is provided with a saw notch retaining the filter plate (35) and at the same time contains the planar waveguides (40.2, 40.3, 40.4, 40.5, 40.6), is chip support for the photodiode circuit and the laser-diode circuit (42, 44) and receives the glass fibre (41) in a V-shaped groove.

27. Circuit according to Claim 24, wherein
a Mach-Zehnder arrangement is composed of at least three core cells, namely two series-connected passive core cells of planar-optical waveguide networks with filter plate (35) arranged in between and at least one optoelectronic core cell, namely a laser-diode circuit (38, 44) or a photodiode circuit (36, 42).

28. Circuit according to Claim 27, wherein
in cascaded stages the first stage comprises a photodiode circuit (36), the last stage comprises a laser-diode circuit (38) and all the stages situated in between each comprise both a photodiode circuit (36) and a laser-diode circuit (38).

## Revendications

1. Circuit optoélectronique pour le mode d'émission et le mode de réception bidirectionnel simultané selon un procédé de multiplexage des longueurs d'ondes, ayant un montage dans lequel la position relative des composants actifs du circuit (5, 6', 6") définit leur fonctionnement et qui est réalisé sous la forme d'un circuit intégré à un étage, comprenant :
- un dispositif de guides de lumière ayant un coupleur optique (11) avec des côtés de branchement opposés, quatre banches de guides d'ondes (1, 2, 3, 4), qui débouchent par paires (1, 2, 3, 4) de chaque côté de branchement dans un coupleur (11) et qui coopèrent dans le coupleur (11), et
- un détecteur de signal lumineux (6', 6") et une source de signal lumineux (5) installés sur les côtés de branchement opposés du coupleur (11), avec des longueurs d'ondes discrètes différentes (λ_{S}, λ_{E}) pour le mode d'émission et le mode de réception, et découplés optiquement l'un de l'autre par des réflecteurs à réseaux sélectifs vis-à-vis des longueurs d'ondes (8, 10', 10") sur les branches de guides d'ondes (2, 3, 4) qui les relient.

2. Circuit optoélectronique pour le mode d'émission et de réception bidirectionnel simultané selon un procédé de multiplexage de longueurs d'ondes, avec un montage selon lequel la position relative des composants actifs du circuit (42, 44) définit leur fonctionnement et qui est réalisé comme un circuit hybride à un étage comprenant :
- un dispositif de guides de lumière comportant un coupleur optique (40.3) avec des côtés de branchement opposés et quatre branches de guides de lumière (40.2, 40.5, 2x40.4), qui débouchent par paires de chaque côté de branchement dans le coupleur (40.3) et qui coopèrent à l'intérieur du coupleur (40.3), et
- un détecteur de signal lumineux (42) et une source de signal lumineux (44) prévus sur les côtés de branchement opposés du coupleur (40.3) et conçus pour des longueurs d'ondes discrètes différentes pour le mode d'émission et le mode de réception, et découplés optiquement l'un de l'autre par une plaque de filtre (35) diélectrique, réfléchissant de manière sélective les longueurs d'ondes, montée dans la branche des guides de lumière (40.4) reliée au détecteur de signal lumineux (42).

3. Circuit optoélectronique pour le mode d'émission et le mode de réception unidirectionnel simultané selon le procédé de multiplexage des longueurs d'ondes avec un montage dans lequel la position relative des composants actifs du circuit (17.1, 21.1; 17.3, 21.2) définit leur fonctionnement et qui est réalisé comme un circuit intégré à un étage, comprenant :
- un dispositif de guide d'onde de lumière ayant deux coupleurs optiques (22.2, 23.2, 22.3, 23.3) branchés en série, avec dans le montage en série des côtés de branchement tournés l'un vers l'autre et opposés ainsi que six branchements de guides de lumière (19.1, 19.3, 19.2, 19.4, 19.5, 19.6, 20.1, 20.3, 20.2, 20.4, 20.5, 20.6), qui arrivent par paires (19.1, 19.3 ; 19.2, 19.4 ; 19.5, 19.6 ; 20.1, 20.3 ; 20.2, 20.4 ; 20.5, 20.6) sur chaque côté de branchement dans les coupleurs (22.2, 23.2, 22.3, 23.3) et qui à l'intérieur des coupleurs (22.2, 23.2, 22.3, 23.3) ils coopèrent, et
- un détecteur de signal lumineux (17.2, 17.3) et une source de signal lumineux (21.1, 21.2) prévus sur les côtés de branchement opposés des coupleurs (22.2, 23.2, 22.3, 23.3) branchés en série, en étant conçus pour des longueurs d'ondes discrètes différentes (λ_{S1}, λ_{S2} ou λ_{E2}, λ_{E3}) pour le mode d'émission et de réception, et découplés optiquement l'un de l'autre par des réflecteurs à réseaux sélectifs vis-à-vis des longueurs d'ondes (33.1, 26.1, 26.2, 28.1, 27.1, 27.2, 28.2, 33.2, 29.1, 29.2, 31.1, 30.1, 30.2, 31.2) montés sur les branches de guides de lumière (19.2, 19.4 ou 20.2, 20.4) reliant les coupleurs (22.2, 23.2, 22.3, 23.3) du montage en série et/ou sur la branche de guide de lumière (19.3, 20.3) reliant le détecteur de signal lumineux (17.2, 17.3) au montage en série des coupleurs (22.2, 23.2, 22.3, 23.3).

4. Circuit optoélectronique pour le mode d'émission et de réception unidirectionnel simultané selon le procédé de multiplexage de longueurs d'ondes ayant un montage dans lequel la position relative des composants actifs du circuit (36, 38) définit leur fonctionnement et qui est réalisé comme un circuit hybride à un étage comprenant :
- un dispositif de guide de lumière ayant deux coupleurs optiques (39.2, 39.4) branchés en série avec des côtés de branchement tournés l'un vers l'autre dans le branchement en série et opposés l'un par rapport à l'autre ainsi que six branches de guides de lumière (39.1, 39.3, 2x(39.5 + 39.6), 39.3, 39.7) qui débouchent par paires (39.1, 39.3 ; 2x(39.5 + 39.6) ; 39.3, 39.7) de chaque côté de branchement dans les coupleurs (39.2, 39.4) en coopérant à l'intérieur des coupleurs (39.2, 39.4), et
- un détecteur de signal lumineux (36) et une source de signal lumineux (38) prévus sur les côtés de branchement opposés des coupleurs (39.2, 39.4) branchés en série, en étant conçus pour des longueurs d'ondes discrètes différentes pour le mode d'émission et le mode de réception, et découplés optiquement par des plaques de filtre (35) diélectriques, à réflexion sélective vis-à-vis des longueurs d'ondes, entre les branches de guides de lumière (2x(39.5 + 39.6)) reliant le montage en série des coupleurs (39.2, 39.4).

5. Circuit optoélectronique pour le mode d'émission et de réception unidirectionnel simultané selon le procédé de multiplexage par les longueurs d'ondes, dans un montage dans lequel la position relative des composants actifs du circuit (17.1, 17.2, 17.3, 21.1, 21.2) définit le fonctionnement et qui est réalisé comme un circuit intégré à plusieurs étages comprenant :
- un dispositif de guide de lumière comportant dans chaque étage (32.1, 32.2, 32.3), deux coupleurs optiques branchés en série (22.1, 23.1; 22.2, 23.2; 22.3, 23.3), et dans le montage en série, des côtés de branchement tournés du même côté et aussi opposés, ainsi que des branches de guides de lumière (18.1, 18.3, 18.2, 18.4, 18.5, 18.6, 19.1, 19.3, 19.2, 19.4, 19.5, 19.6, 20.1, 20.3, 20.2, 20.4, 20.5, 20.6), qui débouchent par paires (18.1, 18.3; 18.2, 18.4; 18.5, 18.6 ; 19.1, 19.3 ; 19.2, 19.4 ; 19.5, 19.6 ; 20.1, 20.3 ; 20.2, 20.4 ; 20.5, 20.6) étant reliées par paires de chaque côté de branchement dans les coupleurs (22.1, 23.1; 22.2, 23.2; 22.3, 23.3) et coopèrent à l'intérieur des coupleurs (22.1, 23.1; 22.2, 23.2; 22.3, 23.3), et
- un détecteur de signal lumineux (17.1) dans le premier étage (32.1) et une source de signal lumineux (21) dans le dernier étage (32...) ainsi qu'un détecteur de signal lumineux (17.2, 17.3....) et une source de signal lumineux (21.1, 21.2...) dans chaque étage intermédiaire (32.2 ou 32.3), qui dans les étages intermédiaires (32.2 ou 32.3) et dans le premier étage (32.1) vis-à-vis du détecteur de signal lumineux (17.1) et dans le dernier étage (32...) vis-à-vis de la source de signal lumineux (21....), sont montés de façon analogue à un étage intermédiaire (32.2 ou 32.3), sur les côtés de branchement opposés des coupleurs (22.1, 23.1; 22.2, 23.2; 22.3, 23.3), branchés en série, en étant prévus pour des longueurs d'ondes discrètes différentes (**λ**_{S1}, λ_{S2}) pour le mode d'émission et le mode de réception, et qui dans chaque étage (32.1, 32.2, 32.3, 32...), sont découplés optiquement par des réflecteurs à réseaux sélectifs vis-à-vis des longueurs d'ondes (24.1, 24.2, 25.1, 25.2, 33.1, 26.1, 26.2, 28.1, 27.1, 27.2, 28.2; 33.2, 29.1, 29.2, 31.1, 30.1, 30.2, 31.2) sur les branches de guides de lumière (18.2, 18.4; 19.2, 19.4; 20.2, 20.4) reliant les coupleurs (22.1, 23.1; 22.2, 23.2; 22.3, 23.3) du montage en série, et/ou sur la branche de guide de lumière (19.3, 20.3) reliant le détecteur de signal lumineux (17.2, 17.3) au montage en série des coupleurs (22.2, 23.2 ; 22.3, 23.3).

6. Circuit optoélectronique pour le mode d'émission et le mode de réception unidirectionnel simultané selon le procédé de multiplexage des longueurs d'ondes dans un montage dans lequel, la position relative des différents composants du circuit (36, 38) est définie et qui est réalisé sous la forme d'un circuit hybride à plusieurs étages comprenant :
- un dispositif de guides de lumière comportant dans chaque étage deux coupleurs optiques (34.2, 34.4; 39.2, 39.4; 37.4, 37.2) branchés en série, avec dans le montage en série des côtés de branchement tournés les uns vers les autres et aussi opposés ainsi que six guides de lumière (34.1, 34.3, 2x(34.5+34.6), 34.7, ou sans 39.1, 39.3, 2x(39.5+39.6), 39.3, 39.7 ou sans, 37.7, 2x(37.6+37.5), sans, 37.3) qui débouchent par paires (34.1, 34.3 ; 2x(34.5+34.6) ;34.7, sans ou 39.1, 39.3; 2x(39.5+39.6) ; 39.3, 39.7 ou sans, 37.7; 2x(37.6+37.5) ; sans, 37.3) à chaque côté de branchement dans les coupleurs (34.2, 34.4; 39.2, 39.4; 37.4, 37.2) et coopèrent à l'intérieur des coupleurs (34.2, 34.4; 39.2, 39.4; 37.4, 37.2), et
- un détecteur de signal lumineux (36) dans le premier étage et une source de signal lumineux (38) dans le dernier étage ainsi qu'un détecteur de signal lumineux (36) et une source de signal lumineux (38) dans chaque étage intermédiaire qui, dans chaque étage intermédiaire et dans le premier étage vis-à-vis du détecteur de signal lumineux (36) et dans le dernier étage, vis-à-vis de la source de signal lumineux (38), sont réalisés de façon analogue à un étage intermédiaire sur les côtés de branchement opposés des coupleurs (34.2, 34.4; 39.2, 39.4; 37.4, 37.2) branchés en série, en étant conçus pour des longueurs d'ondes discrètes différentes pour le mode d'émission et le mode de réception, et qui dans chaque étage sont découplés optiquement par des plaques de filtre diélectriques (35) à réflexion sélective vis-à-vis des longueurs d'ondes sur les branches de guides de lumière (34.5, 34.6, 39.5, 39.6, 37.6, 37.5) reliant les coupleurs (34.2, 34.4; 39.2, 39.4; 37.4, 37.2) branchés en série.

7. Circuit selon l'une quelconque des revendications 1 à 6,
dans lequel
le coupleur (11; 22.1, 22.2, 22.3, 23.1, 23.2, 23.3, 34.2, 34.4, 37.2, 37.4; 39.2, 39.4; 40.3) est un coupleur à interférence multimode.

8. Circuit selon l'une quelconque des revendications 1 à 7,
dans lequel
la branche de guide de lumière (2; 40.2) entre la source de signal lumineux (5; 44) et le coupleur (11; 40.3) comporte un autre réflecteur (8) ne réfléchissant de manière sélective principalement que la lumière d'une longueur d'onde pour le mode de réception (λ_{E}).

9. Circuit selon l'une quelconque des revendications 1, 3, 5 ou circuit selon l'une quelconque des revendications 7 ou 8,
dans lequel
les branches de guides de lumière (3, 4) entre les détecteurs de signal lumineux (6', 6") et le coupleur (11) comportent chaque fois un filtre d'arrêt à bande (10', 10") dont la longueur d'onde de blocage est essentiellement égale à la longueur d'onde pour le mode d'émission (λ_{S}).

10. Circuit selon l'une quelconque des revendications 1 à 3, 5 ou circuit selon l'une quelconque des revendications 7, 8 ou 9,
dans lequel
la longueur d'onde du mode d'émission (λₛ) est supérieure à la longueur d'onde du mode de réception (λ_{E}) et la section des branches de guides de lumière (3, 4) entre les détecteurs de signal lumineux (6', 6") et le coupleur (11) dans la zone entre les filtres à bandes d'arrêt (10', 10") et le détecteur de signal lumineux (6', 6") pour réduire la diaphonie optique est tellement faible que la longueur d'onde de coupure se trouve en dessous de la longueur d'onde du mode d'émission (λ_{S}).

11. Circuit selon l'une quelconque des revendications 1, 3, 5 ou circuit selon l'une quelconque des revendications 7, 8 ou 9,
dans lequel
la longueur d'onde du mode d'émission (λ_{S}) est inférieure à la longueur d'onde du mode de réception (λ_{E}) et les branches de guides de lumière (3, 4) entre les détecteurs de signal lumineux (6', 6") et le coupleur (11) dans la zone comprise entre les filtres à bandes d'arrêt (10', 10") et le détecteur de signal lumineux (6', 6") sont munies chaque fois d'un élément absorbant (9.3, 9.4, 9.5) formé d'une couche de matière semi-conductrice quaternaire dont l'intervalle de bande correspond à une longueur d'onde comprise entre la longueur d'onde du mode d'émission (λ_{S}) et celle du mode de réception (λ_{E}).

12. Circuit selon l'une quelconque des revendications 1, 3, 5 ou circuit selon l'une quelconque des revendications 7, 8 ou 9,
dans lequel
on a un montage Mach-Zehnder, formé d'un dispositif de guide de lumière avec un premier coupleur à 3-dB (22.2, 22.3) et quatre branches de guides de lumière (19.1, 19.2, 19.3, 19.4 ou 20.1, 20.2, 20.3, 20.4), un second coupleur à 3-dB (23.2, 23.3) avec quatre branches de guides de lumière (19.2, 19.4, 19.5, 19.6 ou 20.2, 20.4, 20.5, 20.6),
une cinquième branche de guide de lumière (19.5, 20.5) étant reliée à la source de signal lumineux (21.1, 21.2) et une seconde branche de guide de lumière (19.3, 20.3) étant reliée au détecteur de signal lumineux (17.2, 17.3) de façon que les deux branches de guides de lumière intérieures (19.2, 19.4, 20.2, 20.4) soient communes aux deux coupleurs (22.2, 23.2, 22.3, 23.3), et
dans les branches de guides de lumière, intérieures (19.2, 19.4 ou 20.2, 20.4) il y a chaque fois un réflecteur (28.1, 28.2, 31.1, 31.2) à réflexion sélective en fonction des longueurs d'ondes ne réfléchissant essentiellement que la lumière des longueurs d'ondes pour le mode d'émission (λ_{S1}, λ_{S2}).

13. Circuit selon la revendication 12,
dans lequel
la longueur d'onde pour le mode d'émission (λ_{S1}, λ_{S2}) et la longueur d'onde pour le mode de réception (λ_{E1,} λ_{E2}) sont différentes, et
dans les branches de guides de lumière intérieures (19.2, 19.4, 20.2, 20.4), il y a des réflecteurs (26.1, 26.2, 27.1, 27.2, 29.1, 29.2, 30.1, 30.2) sélectifs vis-à-vis de la longueur d'onde pour la longueur d'onde respective du mode de réception (λ_{E1}, λ_{E2}) et pour des polarisations TE, TM, ainsi que des réflecteurs sélectifs vis-à-vis des longueurs d'ondes (28.1, 28.2, 31.1, 31.2) pour la longueur d'onde respective du mode d'émission (λ_{S1},λ_{S2}) et la polarisation TE.

14. Circuit selon la revendication 13,
dans lequel
dans la seconde et la troisième branche de guide de lumière (19.3, 20.3) il est prévu un réflecteur (33.1, 33.2) sélectif vis-à-vis des longueurs d'ondes pour les longueurs d'ondes respectives du mode d'émission (λ_{S1}, λ_{S2}) et la polarisation TE.

15. Circuit selon l'une quelconque des revendications 12 à 14,
dans lequel
au moins deux montages Mach-Zehnder sont installés en cascade et chaque fois une sixième branche de guide de lumière (18.6, 19.6) de l'étage précédent est reliée à la première branche de guide de lumière (19.1, 20.1) de l'étage suivant et les longueurs d'ondes du mode d'émission (λ_{S}) et celles du mode de réception (λ_{E}) de chaque étage sont différentes.

16. Circuit selon l'une quelconque des revendications 1 à 15,
dans lequel
le détecteur de signal lumineux est une photodiode (6', 6", 17.1, 17.2, 17.3).

17. Circuit selon la revendication 16,
dans lequel
la photodiode (6', 6' ', 17.1, 17.2, 17.3, 36, 42) comporte une liaison semi-conductrice pour réduire la diaphonie des sources de signal lumineux (5, 21.1, 21.2, 38, 44), cette liaison semi-conductrice étant essentiellement transparente à la lumière de la longueur d'onde du mode d'émission (λ_{S}) et absorbante pour la lumière de la longueur d'onde du mode de réception (λ_{E}).

18. Circuit selon l'une quelconque des revendications 1 à 15,
dans lequel
le détecteur de signal lumineux (6', 6", 17.1, 17.2, 17.3, 36, 42) est subdivisé en une première section de matière quaternaire et une seconde section de matière ternaire en série avec la première section.

19. Circuit selon l'une quelconque des revendications 1 à 18,
dans lequel
les détecteurs de signal lumineux (6', 6") et/ou la source de signal lumineux (5) comporte des absorbeurs (9.1, 9.2, 9.3, 9.4, 9.5), voisins chaque fois pour la lumière de la longueur d'onde du mode d'émission (λ_{S}) ou la longueur d'onde du mode de réception (λ_{E}).

20. Circuit selon l'une quelconque des revendications 1, 3, 5, ou circuit selon l'une quelconque des revendications 7 à 19,
dans lequel
la source de signal lumineux (5; 21.1, 21.2) et/ou les réflecteurs sélectifs vis-à-vis des longueurs d'ondes (8, 10', 10", 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) sont munis d'éléments chauffants situés à leur voisinage immédiat.

21. Circuit selon l'une quelconque des revendications 1, 3, 5, ou circuit selon l'une quelconque des revendications 7 à 20,
dans lequel
les réflecteurs sélectifs vis-à-vis des longueurs d'ondes (8, 10', 10", 24.1, 24.2, 25.1, 25.2, 26.1, 26.2, 27.1, 27.2, 28.1, 28.2, 29.1, 29.2, 30.1, 30.2, 31.1, 31.2, 33.1, 33.2) sont des réflecteurs à réseaux notamment des réflecteurs de bragg.

22. Circuit selon l'une quelconque des revendications 1 à 21,
dans lequel
une branche de guide de lumière (1) reliée à une interface (7) pour le branchement d'un guide de lumière externe, est réalisée comme transformateur de mode (12) directement en amont de l'interface (7).

23. Circuit selon l'une quelconque des revendications 1 à 22,
dans lequel
la source de signal lumineux (5, 21.1, 21.2, 38, 44) est une diode laser monomode.

24. Circuit selon l'une quelconque des revendications 2, 4 ou 6,
dans lequel
des cellules de base des réseaux de guides de lumière optique planaire sont réalisées en technique silice sur silicium et les cellules de base des circuits de laser et de photodiodes (38, 44, 36, 42) optoélectroniques planaires sont réalisées en technique inP et sont installées sur une plaque de support (43).

25. Circuit selon l'une quelconque des revendications 2, 4 ou 6 ou 24,
dans lequel
les réflecteurs sélectifs vis-à-vis des longueurs d'ondes associées aux deux branches de guides de lumière (34.5, 34.6; 37.5, 37.6; 39.5, 39.6; 40.4) dans le dispositif guide de lumière sont réalisés sous la forme d'une plaque de filtre diélectrique (35) en une seule pièce.

26. Circuit selon la revendication 25,
dans lequel
la plaque de support (43) est munie d'une fente sciée tenant la plaque de filtre (35) et contient en même temps les guides de lumière plans (40.2, 40.3, 40.4, 40.5, 40.6), sert de support pour la puce comportant le circuit des photodiodes et des diodes laser (42, 44) et reçoit les fibres de verre (41) dans une rainure en V.

27. Circuit selon la revendication 24,
dans lequel
un montage Mach-Zehnder est composé d'au moins trois cellules de base, à savoir deux cellules de base passives branchées en série avec des circuits de guides de lumière optique planaire et entre ceux-ci des plaques de filtres (35) et au moins une cellule de base optoélectronique, à savoir un circuit à diodes laser (38, 44) ou un circuit à photodiodes (36, 42).

28. Circuit selon la revendication 27,
**caractérisé en ce que**
dans des étages en cascade, le premier étage est un circuit de photodiodes (36), le dernier étage un circuit de diodes laser (38) et tous les étages intermédiaires comportent chaque fois un circuit de photodiodes (36) ainsi qu'un circuit de diodes laser (38).
